# EUROPÄISCHE PATENTSCHRIFT

(11) **EP 3 060 328 B1**
(45) Veröffentlichungstag und Bekanntmachung des Hinweises auf die Patenterteilung: **24.11.2021**
(21) Anmeldenummer: 14789564.3
(22) Anmeldetag: 27.10.2014
(51) Int. Cl.: B01D 53/84, B01D 53/85

(54) **VERFAHREN ZUR CHEMISCH-BIOLOGISCHEN ABGASREINIGUNG SOWIE BIOREAKTOR UND ANLAGE ZUR DESSEN DURCHFÜHRUNG**
METHOD FOR CHEMICAL-BIOLOGICAL EXHAUST-GAS PURIFICATION, AND BIOREACTOR AND INSTALLATION FOR PERFORMING SAID METHOD
PROCÉDÉ D'ÉPURATION BIOCHIMIQUE D'EFFLUENTS GAZEUX AINSI QUE BIORÉACTEUR ET INSTALLATION DE MISE EN OEUVRE DE CE PROCÉDÉ

(30) Priorität: 25.10.2013 DE 102013017771
(43) Veröffentlichungstag der Anmeldung: 31.08.2016
(73) Patentinhaber: AFOTEK Anlagen für Oberflächentechnik GmbH, 36251 Bad Hersfeld (DE)
(72) Erfinder: Schiweck, Reinhard, 42897 Remscheid (DE)
(74) Vertreter: Specht, Peter
(86) Internationale Anmeldenummer: PCT/EP2014/073002
(87) Internationale Veröffentlichungsnummer: WO 2015/059308

(56) Entgegenhaltungen:
- WO-A1-2006/110947
- DE-A1- 19 928 087
- DE-A1-102011 100 093
- DE-U1- 8 623 752
- DE-U1- 9 304 082
- DE-U1-202009 005 612
- US-A- 5 891 711
- US-B1- 6 479 276
- None

## Beschreibung

Die vorliegende Erfindung betrifft ein Verfahren zur chemisch-biologischen Reinigung von Abgasen, wobei als Emissionen angefallene, in den Abgasen enthaltene Verbindungen hinsichtlich ihrer chemischen Zusammensetzung und Menge im Abgas bestimmt und in mindestens einem Reaktorraum eines Bioreaktors abgebaut werden, in dem auf einem inerten Trägermaterial ein Biofilm mit mindestens einer Art von zum Abbau der organischen Verbindungen geeigneten Mikroorganismen angesiedelt ist, wobei das inerte Trägermaterial und der Biofilm mittels mindestens einer Befeuchtungseinrichtung mit einer wässrigen Behandlungsflüssigkeit befeuchtet werden, welche in einem Fermenter mit den Mikrorganismen sowie mit Nährstoffen für dieselben versetzt wird.

Des Weiteren betrifft die Erfindung einen Bioreaktor zur chemisch-biologischen Reinigung von Abgasen, insbesondere zur Durchführung eines Verfahrens der vorstehend genannten Art,
- mit mindestens einem Reaktorraum, in dem im Abgas enthaltene als Emissionen angefallene Verbindungen abgebaut werden,
- mit einem sich in dem Reaktorraum befindenden inerten Trägermaterial, auf dem ein Biofilm mit mindestens einer Art von zum Abbau der organischen Verbindungen geeigneten Mikroorganismen angesiedelt ist,
- mit mindestens einer Befeuchtungseinrichtung, mittels derer das Trägermaterial und der Biofilm mit einer wässrigen Behandlungsflüssigkeit befeuchtet werden, welche die Mikrorganismen sowie Nährstoffe für dieselben enthält.

Schließlich betrifft die Erfindung eine Anlage zur chemisch-biologischen Reinigung von Abgasen, insbesondere zur Durchführung eines Verfahrens der eingangs genannten Art, und/oder mit einem Bioreaktor der vorstehend genannten Art,
- mit einer Erfassungseinrichtung, in der als Emissionen angefallene, in den Abgasen enthaltene Verbindungen hinsichtlich ihrer chemischen Zusammensetzung und Menge im Abgas bestimmt werden,
- mit einem Bioreaktor, der mindestens umfasst:
   einen Reaktorraum, in dem die im Abgas enthaltenen, als Emissionen angefallenen Verbindungen abgebaut werden,
   ein sich in dem Reaktorraum befindendes inertes Trägermaterial, auf dem ein Biofilm mit mindestens einer Art von zum Abbau der organischen Verbindungen geeigneten Mikroorganismen angesiedelt ist,
   mindestens eine Befeuchtungseinrichtung, mittels derer das Trägermaterial und der Biofilm mit einer wässrigen Behandlungsflüssigkeit befeuchtet werden, welche die Mikrorganismen sowie Nährstoffe für dieselben enthält,
- sowie mit einem Fermenter, in dem die wässrige Behandlungsflüssigkeit mit den Mikroorganismen sowie mit den Nährstoffen versetzt wird.

Die Reinigung von Abgasen mit Verunreinigungen organischer Stoffe von gas- bzw. dampfförmigen Bestandfeilen wird entsprechend dem Stand der Technik vorzugsweise nach thermischen oder herkömmlichen biologischen Verfahren durchgeführt. Anlagen der Verbrennungstechnologie sind wegen der hohen laufenden Betriebskosten durch den Einsatz von Erdgas in Frage gestellt oder problematisch. Anlagen der biologischen Abgasreinigung sind besonders durch das überaus große Anlagenvolumen und eine problematische Abfallentsorgung gekennzeichnet. Dieses Verfahren basiert auf einer Ansiedlung von Bakterien auf meist organischen Trägersubstanzen. Die zu vernichtenden Schadstoffe werden in ihrer Dampfphase in dem Maße vernichtet, wie diese mit den assimilierten Bakterien in Kontakt kommen. Die Entsorgung der durch den biologischen Abbau entstandenen Reste der Biomasse - zumeist Holzschnitzel - erfolgt in Abständen von durchschnittlich drei bis fünf Jahren und bedarf jeweils einer Untersuchung und Prüfung nach der Biostoffverordnung.

Ein Verfahren, ein Bioreaktor und eine Anlage der eingangs genannten Art sind aus der EP 0 933 121 A1 bekannt. Dieses Dokument enthält einleitend auch eine umfangreiche Darstellung zum Einsatz von bekannten biologisch arbeitenden Systemen in der Abluftreinigung, wobei insbesondere drei Typen von Biosystemen unterschieden werden: Biofilter, Biowäscher und Tropfkörperbioreaktoren.

Speziell für Biofilter ist eine Darstellung der prozesstechnischen Grundlagen, der Auslegung und verschiedener bekannter Ausführungsformen der VDI-Richtlinie VDI 3477, Ausgabe 11/2004, "Biologische Abgasreinigung, Biofilter" zu entnehmen. Nachdem in Biofiltern die Kulturen der Mikroorganismen, deren als Metabolisierung bezeichnete Stoffwechselvorgänge die Abgasreinigung bewirken, sich an den aus organischem Material bestehenden Trägermaterialien entwickelt haben, ist die Beteiligung der Inhaltsstoffe des Abgases an der Metabolisierung oft unbefriedigend, weil es sich dabei in der Regel oft nur um chemische Zufallsreaktionen der Schadstoffe mit den Mikroorganismen auf den Trägern handelt, wobei die Mikroorganismen auch - und nachteilhaft teilweise vorrangig - aus dem organischen Trägermaterial ihre Nährstoffe entnehmen. Des Weiteren ist nachteiligerweise, insbesondere bei einer Außenaufstellung von derartigen Biofiltern, keine eindeutig determinierbare Temperaturführung im Reaktor möglich. Aus der genannten Richtlinie geht unter anderem hervor, dass Anlagen mit Biofiltern insbesondere durch vergleichsweise große Volumina und eine teilweise problembehaftete Abfallentsorgung gekennzeichnet sind, die in Abständen von drei bis fünf Jahren erfolgt und in Deutschland jeweils einer speziellen Untersuchung und Prüfung nach der Biostoffverordnung (BioStoffV, Verordnung über Sicherheit und Gesundheitsschutz bei Tätigkeiten mit biologischen Arbeitsstoffen vom 27.01.1999, Ergänzungen/Änderungen vom 25.11.2003, 23.12.2004, 31.10.2006, 06.03.2007, 18.12.2008) bedarf.

Die EP 0 933 121 A1 beschäftigt sich mit dem Problem, einen biologischen Abbau von flüchtigen organischen Verbindungen auch im Falle von Gasemissionen aus mehreren und/oder multifunktionellen chemischen Produktionseinheiten in befriedigender und ökonomischer Weise zu gewährleisten. Dazu werden die Gasemissionen an jeder Produktionseinheit einzeln erfasst und je nach ihrer chemischen und toxikologischen Natur spezifisch in verschiedenen, voneinander getrennten technologischen Einheiten, wie in einem Adsorber, in einem Wäscher sowie in einem ersten und in einem zweiten Biorieselbettreaktor, behandelt. In jedem dieser beiden Biorieselbettreaktoren werden das Trägermaterial und der Biofilm im Abstrom kontinuierlich mit Perkolationswasser berieselt, das abfließende Perkolationswasser wird als Pumpensumpf gesammelt und über eine zum oberen Ende des Biorieselbettreaktors führende Leitung mit Umwälzpumpe rezykliert, wobei dem Perkolationswasser je nach Bedarf Nährstoffe sowie regelmäßig Mikroorganismen zudosiert werden. Vorzugsweise werden deshalb dem Perkolationswasserkreislauf in Abhängigkeit von periodischen Analyseergebnissen beispielsweise Phosphate, Ammonium-, Natrium- und Kaliumsalze sowie Spurenelemente wie Calcium, Eisen, Mangan, Zink, Bor, Cobalt, Kupfer, Nickel und Molybdän zudosiert. Hierzu wird gemäß der EP 0 933 121 A1 eine geeignete Nährlösung mit fest voreingestellter Zusammensetzung in den Pumpensumpf oder in die zum Kopfende führende Leitung dosiert.

Biorieselbettreaktoren, auch als Tropfkörperbioreaktoren (biological trickling filters) oder als Perkolationsbiofilter bezeichnet, wie sie die EP 0 933 121 A1 vorsieht, verwenden immobilisierte Mikroorganismen auf partikelförmigen oder strukturierten, - im Gegensatz zu Biofiltern - mineralischen oder synthetischen Trägern. Die jeweils als Festbett angeordneten Träger werden durch ein Gemisch aus Luft und dem zu behandelnden Gas im Gegenstrom oder im Gleichstrom zum Rieselwasser durchströmt. Der Fluss des Rieselwassers resultiert aus einer dauernden Rezirkulation der Perkolationsflüssigkeit. Tropfkörperbioreaktoren sind auch ausführlich in der VDI-Richtlinie VDI 3478, Blatt 2, Entwurf April 2008, "Biologische Abgasreinigung, Biorieselbettreaktoren" beschrieben und eignen sich sowohl zur Reinigung von sowohl lösemittel-, als auch geruchsbeladener Abluft mit Emissionskonzentrationen bis zu etwa 1g/m³.

Der aus der EP 0 933 121 A1 bekannte Reaktor ist dabei derart ausgelegt, dass die Gasemissionen im Abstrom oder Aufstrom, d. h. im Gleich- oder Gegenstrom zur Strömungsrichtung des Perkolationswassers, durch den Biorieselbettreaktor geleitet werden können. Vorzugsweise sind dabei die im Kopfende bzw. im unteren Bereich des Bioreaktors angeordneten Ablufteinlass- und -auslasssysteme so ausgebildet, dass die Strömungsrichtung in Intervallen umgekehrt, d. h. die Abluft abwechselnd im Abstrom oder im Aufstrom durch den Bioreaktor geleitet werden kann. Dadurch sollen eine geringere Verstopfungsanfälligkeit sowie höhere Dichten und eine einheitlichere Verteilung der auf den Trägern fixierten Biomasse ermöglicht werden. Obwohl die aus der EP 0 933 121 A1 bekannte technische Lösung eine Reihe von vorteilhaften Merkmalen aufweist, ist sie aufgrund der unterschiedlichen notwendigen technologischen Behandlungseinheiten und Anlagenstränge doch als apparativ aufwändig anzusehen und auch hinsichtlich ihrer Verfahrenseffizienz verbesserungswürdig.

Ein Bioreaktor der eingangs genannten Art ist in verschiedenen Ausführungen auch aus der US 6 479 276 B1 bekannt. Diese beschreibt einen Reaktor mit zwei vom Abgas durchströmten separaten Kammern. In einer Ausführung ist vorgesehen, dass der Reaktorraum durch zwei, nacheinander vom Abgas durchströmbare Kammern gebildet ist, die miteinander verbunden sind. Die erste Kammer ist dabei als Rieselbettreaktor ("trickling filter unit") ausgebildet und enthält nur biologisch inerte Füllstoffe, während die zweite Kammer als - im Sinne der obigen Definition nach der genannten VDI-Richtlinie - "echter" Biofilter ("biological filter unit") ausgebildet ist, insofern sie Kompost als biologisch aktives Medium enthält. Beide Kammern befinden sich in eigenen Gehäusen, wobei das zweite Gehäuse eine zusätzliche vertikale innere Unterteilung aufweist.

Schließlich beschreibt die DE 10 2011 100 093 A1 ein Verfahren, einen Bioreaktor und eine Anlage der eingangs genannten Art. Hierbei ist vorgesehen, dass die Behandlungsflüssigkeit bei einer Rezirkulation durch den Fermenter geleitet wird, wobei jeder der Nährstoffe separat entsprechend der chemischen Zusammensetzung und Menge der im Abgas enthaltenen Verbindungen in den Fermenter dosiert wird. Dementsprechend ist in der bekannten Anlage vorgesehen, dass die Rückführleitung zur Rezirkulation der Behandlungsflüssigkeit mit einem ersten Abschnitt zunächst in den Fermenter und von dort mit einem zweiten Abschnitt zur Befeuchtungseinrichtung geführt ist, welche sich im Reaktorraum oberhalb des inerten Trägermaterials befindet.

Aus der DE 199 28 087 A1 ist eine Filteranlage zur biologischen Abluft- und Abgasreinigung bekannt, bei der das zu behandelnde Abgas in einen Luftbefeuchtungs- und Nährlösungsbehälter geleitet wird. Das zu behandelnde Abgas wird dabei zunächst über eine erste Zuluftleitung in einen Luftbefeuchtungsraum des Luftbefeuchtungs- und Nährlösungsbehälters geleitet und dort mit Hilfe einer Luftbefeuchtungs-Sprühvorrichtung befeuchtet. Ein Luftstrom mit einer Feuchtigkeit von 80-98% wird über ein zweite Zuluftleitung in einen Befeuchtungsraum eines Biofilters oberhalb einer Filterschüttung geleitet und nach Durchströmung derselben über eine Verbindungsleitung zurück in den Luftbefeuchtungs- und Nährlösungsbehälter geleitet wird.

Als verbesserungswürdig im genannten Stand der Technik erscheinen dabei insbesondere folgende Gegebenheiten.

Der Flächenbedarf für die Aufstellung einer biologischen Abgasreinigungvorrichtung bzw. -anlage ist gemäß der DE 10 2011 100 093 A1 geprägt durch ein System, das die Verwendung von quaderförmigen Uberseecontainern vorsieht. Ebenso werden - wie eingangs dargestellt - im Rahmen der Umsetzung der genannten VDI Richtlinie großflächig ausgehobene Gruben als Reaktionsräume eingesetzt, die mit Beton ausgekoffert werden. Daraus ergibt sich ein nachteilhaft hoher Flächenbedarf. Die Befeuchtung von festen Substraten erfolgt dabei durch das Besprühen und/oder Berieseln. Insbesondere werden dabei die Nährstofflösungen im laufenden Betrieb separat auf die Oberfläche des Substrates gepumpt bzw. dosiert. Eine separate Dosierung der Nährstoffe stellt zwar eine vorteilhafte Form einer selektiven Steuerung des Schadstoffabbauprozesses dar, ist jedoch regelungstechnisch aufwändig.

Der vorliegenden Erfindung liegt die Aufgabe zugrunde, ein Verfahren der eingangs beschriebenen Art sowie einen Bioreaktor und eine Anlage zur Durchführung eines derartigen Verfahrens zu schaffen, wobei bei verringertem Raum- bzw. Flächenbedarf und mit geringem technologischem bzw. apparativem Aufwand eine hohe Effizienz und Funktionalität des Verfahrens, des Reaktors bzw. der Anlage gesichert werden soll. Dies soll insbesondere auch bei hinsichtlich des Schadstoffgehalts wechselnden Zusammensetzungen der zu reinigenden Abgase gewährleistet werden können. Hierbei soll zur Erzielung der höchstmöglichen Effizienz insbesondere auch eine geeignete, wenig aufwändige verfahrens- und messtechnische Steuerung und Regelung der Reaktionskinetik der chemisch biologischen Metabolisierungsvorgänge der Mikroorganismen, insbesondere von als solchen eingesetzten Bakterien, geschaffen werden.

Erfindungsgemäß wird dies für das Verfahren dadurch erreicht, dass das Abgas vor seinem Eintritt in den Bioreaktor mit der Behandlungsflüssigkeit befeuchtet wird, so dass bereits befeuchtetes Abgas in den Reaktorraum gelangt.

Die Befeuchtung des Abgases wird dabei im Fermenter vorgenommen, indem eine geregelte Menge des Abgases in dem Fermenterbehälter mit der Behandlungsflüssigkeit in Kontakt gebracht wird. Das Abgas dient somit als Träger für die aus Wasser, Phosphorsalzen, Stickstoffverbindungen und gegebenenfalls chemischen Hilfsmitteln, wie Lösevermittlern, bestehende Behandlungsflüssigkeit, indem diese mit dem als Flüssigkeitsträger fungierenden Abgasstrom aus dem Fermenter in den Reaktorraum gelangt.

Die für die Mikroorganismen notwendige chemische Nährlösung (Behandlungsflüssigkeit) kann dabei stetig und kontinuierlich bzw. quasikontinuierlich sowie auch portioniert in den Reaktorraum eingetragen werden, wobei dazu bevorzugt im Fermenterbehälter eine speziell ausgebildete Regelklappe eingesetzt wird. Diese Regelklappe kann insbesondere zumindest teilweise perforiert und derart steuerbar sein, dass durch die Regelklappe das Abgas zumindest teilweise durch die Behandlungsflüssigkeit geführt wird.

Dementsprechend wird die der Erfindung zugrunde liegende Aufgabe für den Bioreaktor erfindungsgemäß dadurch gelöst, dass der Fermenter ein Behälter ist, der dem Reaktorraum in Strömungsrichtung des Abgases derart vorgeordnet ist, dass das Abgas durch den Fermenter in den Reaktorraum gelangt, wobei es im Fermenter mit der wässrigen Behandlungsflüssigkeit befeuchtet wird. Die Eintragung der Behandlungsflüssigkeit in den Reaktorraum durch das Abgas kann dabei einerseits durch einen - entsprechend der bei einer bestimmten Temperatur vorliegenden Feuchtigkeitsaufnahmefähigkeit des Abgases - in diesem enthaltenen Dampfanteil, als auch durch beim Passieren des Fermenters mitgerissene Tropfen erfolgen. Das Abgas kann dabei insbesondere zur Intensivierung der Feuchtigkeitsaufnahme zumindest teilweise durch die Behandlungsflüssigkeit geleitet werden. Die Behandlungsflüssigkeit kann dabei durch das Gas in Turbulenz versetzt bzw. verwirbelt werden, wodurch eine große Kontaktfläche "Gas - Flüssigkeit" entsteht. Unter diesem Gesichtspunkt ist es vorteilhaft, wenn das Abgas beim Eintritt in den Fermenter eine Strömungsgeschwindigkeit von mindestens 7 m/s aufweist.

Im Bioreaktor gegebenenfalls vorhandene, überschüssige Behandlungsflüssigkeit wird dabei aus dem Bioreaktor in den Fermenter zurücktropfen. Die Behandlungsflüssigkeit kann notwendigenfalls aus dem Bioreaktor auch über eine optional vorhandene Überlaufleitung in den Fermenter zurückgeführt werden, während das Abgas den Bioreaktor vertikal von unten nach oben durchströmt.

Der Strom des aus dem Fermenter-Behälter kommenden Abgases kann mit Vorteil vor seinem Eintritt in den Reaktorraum mittels eines in den Reaktorraum hineinragenden Luftverteilers, der im Rahmen der vorliegenden Anmeldung auch als Diffusor bezeichnet wird, in eine Vielzahl von Teilströmen aufgeteilt werden. Dadurch wird erreicht, dass sich das Abgas im Reaktorraum gleichmäßig verteilt und sich im inerten Trägermaterial keine Vorzugs-Stömungskanäle ausbilden, während in anderen Bereichen des Reaktorraums der Biofilm kaum in Kontakt mit dem Abgas kommt.

Vorteilhafterweise kann somit erfindungsgemäß, insbesondere durch eine im Rahmen der Erfindung bevorzugte unmittelbare Kombination des Reaktorraumes mit dem Fermenter, der gleichzeitig auch als Luftbefeuchter und Luftwäscher dient, mit dem Luftstrom, sowohl die notwendige Befeuchtung, als auch die Zuführung von Nährsalzen für den Reaktionsprozess gleichzeitig vorgenommen werden. Dabei können vorteilhafterweise auch gleichbleibende Bedingungen hinsichtlich der Befeuchtung, und der Zuführung von Reaktionskomponenten für die Metabolisierung eingestellt werden.

Die Temperatur des befeuchteten Abgases kann auf diese Weise mit Vorteil durch eine Temperierung der Behandlungsflüssigkeit gesteuert oder geregelt werden, wobei insbesondere im Reaktorraum über das befeuchtete und temperierte Abgas eine Temperatur im Bereich von 30 °C bis 70 °C eingestellt werden, und wobei bevorzugt die Temperierung der Behandlungsflüssigkeit durch eine im oder am Fermenter angeordnete Heizung, wie z. B. durch Heizrohre und/oderdurch einen Heizmantel, erfolgen kann.

In besonders bevorzugter Ausbildung kann dabei vorgesehen sein, dass die chemische Zusammensetzung und Menge der als Emissionen im Abgas enthaltenen Verbindungen vor und nach der Reinigung des Abgases miteinander und/oder mit einem festgelegten Richtwert verglichen und daraus Steuersignale für die Befeuchtung und Temperierung des Abgases gebildet werden.

Auf diese Weise gelingt es, eine wenig aufwändige verfahrens- und messtechnische Steuerung und Regelung der Reaktionskinetik der chemisch biologischen Metabolisierungsvorgänge der Mikroorganismen bereitzustellen, durch die auch bei hinsichtlich des Schadstoffgehalts wechselnden Zusammensetzungen der zu reinigen den Abgase eine höchstmöglichen Effizienz des erfindungsgemäßen Verfahrens gewährleistet werden kann. Hierbei kann mit Vorteil - im Gegensatz zur DE 10 2011 100 093 A1 - vorgesehen sein, dass die Nährstoffe in einer Mischung mit fest vor eingestelltem Verhältnis zueinander - also nicht separat voneinander - in die Behandlungsflüssigkeit dosiert werden. Dies senkt den regelungstechnischen Aufwand.

Regulatorisch auf die Metabolisierung wirken dabei sowohl der Feuchtegehalt der Luft und deren Temperatur, als auch die entsprechend einem Grad der Befeuchtung im Abgasstrom vorhandene latente Wärme und die Strömungsgeschwindigkeit des Gasstromes, welcher eine Kontaktzeit mit den Mikroorganismen beeinflusst. Der Volumenstrom des Abgases kann dabei bevorzugt in einem Bereich von 7000 m³/h bis 30000 m³/h liegen.

Anders ausgedrückt, handelt es sich bei dem erfindungsgemäßen Verfahren zur chemisch biologischen Reinigung von Abgasen in besonders bevorzugter Ausführungsform also um ein solches, bei dem als Emission angefallene, in den Abgasen enthaltene Verbindungen mindestens in einem Reaktorraum eines Bioreaktors abgebaut werden, in dem auf einem inerten Trägermaterial ein Biofilm mit mindestens einer Art von zum Abbau der organischen Verbindungen geeigneten Bakterienstämmen angesiedelt ist, wobei das inerte Trägermaterial und der Biofilm mittels mindestens einer Befeuchtungseinrichtung mit einer wässrigen Behandlungsflüssigkeit befeuchtet werden, welche in einem Fermenter/ Befeuchter / Wäscher mit den Mikroorganismen sowie mit den

Nährstoffen vorliegen, und welche mit dem Luftstrom nach der Passage des Diffusors in den Reaktorraum geleitet wird und von dort durch Rücktropfen der überschüssigen Flüssigkeit nach der rückläufigen Passage durch den Diffusor in den Fermenter/ Befeuchter / Wäscher zurückgeführt werden können, wobei die Behandlungsflüssigkeit nach dem Vorgang der Befeuchtung in dem Behälter (Fermenter / Befeuchter / Wäscher) mittels der als Träger dienenden, zu reinigenden Abgasluftluft nach der Passage durch den Diffusor in denReaktorraum gelangt, wobei überschüssige Behandlungsflüssigkeit zurück in den Behälter tropft.

In Analogie zu dieser Ausbildung des erfindungsgemäßen Bioreaktors wird die der Erfindung zugrunde liegende Aufgabe für die Anlage dadurch gelöst, dass die Erfassungseinrichtung, in der die als Emissionen angefallenen, in den Abgasen enthalte-nen Verbindungen hinsichtlich ihrer chemischen Zusammensetzung und Menge im Abgas bestimmt werden, Bestandteil einer Vorrichtung zur Steuerung und/oder Regelung eines Befeuchtungsgrades des Abgases im Fermenter ist. Durch diese Regelung kann erfindungsgemäß mit Vorteil - wie bereits erwähnt - eine Regelung vermieden werden, welche sich darauf stützt, die Nährstoffe der Behandlungsflüssigkeit separat zu dosieren. Nährstoffe können in einer Mischung mit fest voreingestelltem Verhältnis zueinander aus einem Vorratsbehälter in den Fermenter dosiert werden. Die bekannten Anlagen der eingangs beschriebenen Art werden dabei auch durch eine vorteilhaft mögliche vertikale Bauweise des erfindungsgemäßen Einkammer-Bioreaktors verbessert. Der Flächenbedarf für die erfindungsgemäße biologische Abgasreinigungsanlage vermindert sich dadurch erheblich.

Weitere Vorteile bestehen darin, dass bei leichter Handhabbarkeit und Bedienungsfreundlichkeit insbesondere bei Einsatz von vorgemischter Behandlungsflüssigkeit maximale Abbauraten der Schadstoffe im Abgas sowie niedrige Reingaskonzentrationen gesichert werden können, und bei Einsatz von inerten Befüllungen aus insbesondere anorganischen Substraten, wie etwa aus Lavakies oder Blähton, oder auch aus porösen Kunststoffgranulaten als Dauerbefüllung, die Verwendung von organischen Substraten, wie von Rindenhumus und -mulch, Holzschnitzeln, Heidekraut oder Stroh, als Trägermaterial und dadurch bedingte Zufallsreaktionen vermieden werden kann. Dadurch kann eine vergleichsweise höher definierte, über die Befeuchtung stufenlos steuerbare Reaktionskinetik der Schadstoffabbauprozesse eingestellt werden.

Durch das letzte Merkmal unterscheidet sich die Erfindung insbesondere von den Biofiltern, welche immobilisierte Mikroorganismen auf natürlichen organischen Trägern wie Kompost, Torf, Rinde und dergleichen, allenfalls - wie in der eingangs genannten US 6 479 276 B1 beschrieben - zusammen mit synthetischen Partikeln, wie Polystyrol oder Polyvinylchlorid, oder auch zusammen mit inerten Materialien, wie Ton, Aktivkohle oder Puzzolanerde verwenden. Diese im Behälter als Bett angeordneten Träger werden im Allgemeinen im Aufstrom durch ein Gemisch künstlich befeuchteter Luft und des zu behandelnden Gases durchströmt. Biofilter eignen sich nur zur Reinigung niedriger Konzentrationen an flüchtigen organischen Verbindungen mit wenig schwankender Zusammensetzung und Konzentration. Diese Nachteile treten erfindungsgemäß nicht auf, wenngleich allerdings erfindungsgemäß Bioreaktoren verwendet werden können, wie sie ihrem Grundaufbau nach von den Biofiltern her bekannt sind. Dort unterscheidet man nach der Bauart grob zwischen Kompaktbiofiltern, Containerbiofiltern und Flächenfiltern. Alle genannten Bauarten sind in offener und geschlossener Bauart zu finden. Die offene Bauart ist erfindungsgemäß allerdings nicht bevorzugt, da sie keine derartige Temperatursteuerung ermöglicht, wie dies die Erfindung als bevorzugtes Merkmal vorsieht.

Von den Biowäschern (bioscrubber), wie sie ausführlich in der VDI-Richtlinie VDI 3478, Blatt 1, Entwurf April 2008, "Biologische Abgasreinigung, Biowäscher" beschrieben sind, unterscheidet sich die Erfindung dadurch, dass die Behandlung nicht in mehreren Reaktionseinheiten erfolgen muss. Biowäscher werden zwar - wie die Erfindung - im Wesentlichen zur Behandlung wasserlöslicher Verbindungen mittels Mikroorganismen verwendet, die jedoch in Form eines Belebtschlammes oder teilweise auch in immobilisiertem Zustand vorliegen können. Das Verfahren umfasst die Absorption der löslichen gasförmigen Schadstoffe im Wasser, gefolgt von ihrer Oxidation in flüssiger Phase. In Biowäschern auf der Basis von Belebtschlämmen erfolgt - ähnlich wie bei der Erfindung - die Absorption in einer Waschkolonne mit Trägern, oder das Gas wird im Gegenstrom durch die Mischung aus Wasser und Belebtschlamm geleitet. Der Bioabbau des absorbierten Gases findet dann aber typischerweise in einem getrennten Dekanteur mit Hilfe der im Belebtschlamm enthaltenen Mikroorganismen statt. Der erfindungsgemäß vorgesehene Fermenter dient nicht diesem Zweck. In Biowäschern mit fixierter Biomasse werden die gasförmigen Schadstoffe zuerst im Wasser absorbiert. Das derart beladene Wasser wird anschließend an der Oberfläche eines Tropfkörperbioreaktors dispergiert, wo die gelösten Schadstoffe mit Hilfe der auf den Trägerkörpern des Bioreaktors fixierten Mikroorganismen oxidiert werden. Es erfolgt also eine verfahrenstechnische Verknüpfung einer physikalisch-chemisch wirkenden mit einer biologisch wirkenden Abgasreinigungsstufe. Die Erfindung ist demgegenüber technologisch und apparativ sehr viel weniger aufwändig.

Dabei wird die Erfindung in vollem Maß den biologischen Gesetzmäßigkeiten des Stoffwechsels der eingesetzten Mikroorganismen gerecht, wobei im Rahmen der Anmeldung unter Stoffwechsel bzw. Metabolismus oder Metabolisierung die Aufnahme, der Transport und die chemische Umwandlung von Stoffen in die bzw. in den verwendeten Mikroorganismen sowie die Abgabe von Stoffwechselendprodukten an die Umgebung verstanden wird. Diese biochemischen Vorgänge dienen einerseits dem Aufbau und der Erhaltung der Zellsubstanzen (Baustoffwechsel) sowie andererseits der Energiegewinnung (Energiestoffwechsel) und damit der Aufrechterhaltung der Zellfunktionen der Mikroorganismen. Die beim Stoffwechsel ablaufenden biochemischen Reaktionen werden durch Enzyme katalysiert und/oder inhibiert, also beschleunigt oder gebremst.

Als charakteristisch für die Gesamt-Metabolisierung in dem erfindungsgemäßen Verfahren kann eine Reaktionsgleichung (1) 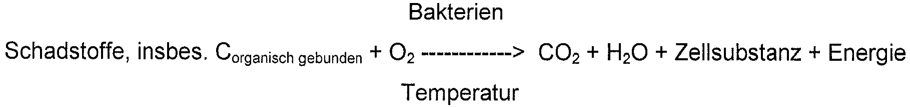 angesehen werden.

Die Wärmetönung dieser Gleichung ist exotherm und läuft in einem Temperaturintervall zwischen 5 °C und 70 °C ab. Dabei ist es bekannt, dass die Zellteilungsgeschwindigkeit von bevorzugt eingesetzten Mikroorganismen bei 20 °C etwa 12 Minuten beträgt und sich durch Temperaturerhöhungen beschleunigt. Am Prozess der Metabolisierung sind neben dem Kohlen- und Sauerstoff sowie der Biomasse der Zellsubstanz auch Stickstoff und Phosphor als Komponenten beteiligt. Dadurch können eine hohe Zellteilungsgeschwindigkeit und somit ein hoher Biomasseertrag der Reaktion und Schadstoffumsatz eingestellt werden.

Unter Anabolismus bzw. Anabolisierung werden die dem Aufbau körpereigener Bestandteile der Mikroorganismen dienenden Metabolisierungsprozesse verstanden. So wird erfindungsgemäß aus einem Teil der Schadstoffe durch Wachstum und Vermehrung der Mikroorganismen eine Biomasse aufgebaut. Diese Biomasse benötigt zu ihrem Aufbau außer den Schadstoffen auch die Nährstoffe, wie z. B. Stickstoff, Phosphor, Schwefel und die Spurenelemente, sowie das Wasser der Behandlungsflüssigkeit als Lebensgrundlage. Da die genannten chemischen Verbindungen nur im Wasser gelöst von den Mikroorganismen verwertbar sind, wachsen diese auf dem Trägermaterial in einem feuchten biologischen Film oder Rasen, wobei auch ein gewisser Anteil der Mikroorganismen in der wässrigen Lösung suspendiert bleibt. Dadurch, dass erfindungsgemäß die der Befeuchtungsgrad, insbesondere beim Durchtritt durch den Fermenter, auf einen gewünschten Wert eingestellt werden kann, ist vorteilhafterweise eine sehr subtile und differenzierte Steuerung der Metabolisierung möglich.

Der Abbau von komplexeren zu einfacheren Molekülen wird als Katabolismus bzw. Katabolisierung bezeichnet. Mit dem Anabolismus ist der Katabolismus durch eine Energiekopplung verbunden. Die beim Katabolismus gewonnene Energie dient beim Anabolismus zum Aufbau komplexerer Moleküle, wobei der Katabolismus und der Anabolismus als die Teile des Metabolismus aufzufassen sind. In dem erfindungsgemäßen Verfahren werden bei der chemisch-biologischen Reinigung der Abgase die Schadstoffe, welche Kohlenstoff- und/oder teilweise Stickstoff- oder Schwefelanteile enthalten können, aus der Abluft abgeschieden und in den katabolischen Teilprozessen bei Anwesenheit von Sauerstoff durch die Mikroorganismen insbesondere zu Kohlendioxid und Wasser oxidiert, wobei die bei der Oxydation frei werdende Energie den Mikroorganismen als Energiequelle bei den Anabolismus-Vorgängen des Stoffwechsels zum Aufbau der Zellsubstanz dient. Gleichzeitig kann die Energiezufuhr über die Temperatur der Behandlungsflüssigkeit im Fermenter gesteuert werden.

In einem stabilen biologischen System, das sich im Betriebszustand des erfindungsgemäßen Bioreaktors nach einer anfänglichen Adaptionszeit ausbildet, besteht dann ein Gleichgewicht zwischen absterbenden und neu gebildeten Mikroorganismen, so dass die Menge an Biomasse im Reaktor etwa konstant bleibt. Die Immobilisierung der Mikroorganismen erfolgt durch die Kapillarkräfte des beispielsweise in Granulatform vorliegenden Trägers. Bei einem Absterben von Mikroorganismen in einer Kolonie wird der Platz auf der Oberfläche der Granulatkapillaren durch neue Kolonien besiedelt. Abgestorbene Mikroorganismen können auch in einer periodisch, insbesondere zu Wartungszwecken erfolgenden, optionalen Kreislaufführung der Behandlungsflüssigkeit mittels einer vom Fermenter zum Kopf des Bioreaktors führenden, mit einer Pumpe ausgerüsteten Steigleitung in den Fermenter gespült und über einen Sumpfablass in unmittelbarer Bodennnähe aus dem Prozess abgeführt werden.

Beim Aufbau der Zellsubstanz ist die Ernährungsweise der Mikroorganismen zu berücksichtigen, wobei man im Hinblick auf die Art der Energiequelle - Licht oder Oxidation chemischer Substanzen - zwischen einer Photo- und einer Chemotrophie, im Hinblick auf einen immer auch notwendigen organischen oder anorganischen Wasserstoffdonator zwischen einer Organo- und einer Lithotrophie und im Hinblick auf den Kohlenstoffdonator in der oben aufgeführten Gleichung - Kohlendioxid oder organische Substanzen - zwischen einer Auto- und einer Heterotrophie unterscheidet. Die spezifischen Bedingungen des erfindungsgemäßen Verfahrens charakterisieren dieses als chemotroph, litho- und organotroph sowie als heterotroph.

In einer chemolithotrophen Reaktion können im erfindungsgemäßen Verfahren Energie und Wasserstoffionen beispielsweise gemäß der folgenden Gleichung (2) aus z. B. in den Nährstoffen enthaltenen Ammoniumionen bereitgestellt werden: 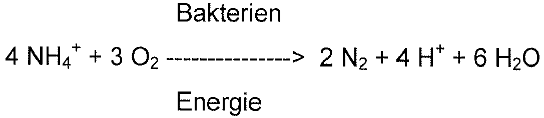 Insbesondere Bakterien, die bevorzugt erfindungsgemäß als Mikroorganismen eingesetzt werden, üben mit Hilfe einer Chemotaxis über ihre Geißeln eine Pförtnerfunktion für Wasserstoff und Kohlenstoff aus, welche aus den Oxydationen der als Donatoren wirkenden Schadstoffmoleküle stammen. Dies ist der erste Schritt einer einsetzenden, sogenannten Primär-Metabolisierung. Weitergehende Stufen der Stoffumwandlung finden dann chemoorganotroph statt.

Bei den Vorgängen der Zellteilung der Mikroorganismen wird dann durch enderogenes Anhängen von anorganischen Phosphatresten an Adenosindiphosphat (ADP) das energiereichere Adenosintriphosphat (ATP) gebildet. Adenosindiphosphat (ADP) ist ein Nucleotid, das aus dem Diphosphat des Nucleosids Adenosin besteht. Bei seiner Reaktion zu ATP wird die Bindung zwischen dem zweiten und dritten Phosphat der Phosphatkette unter Energieverzehr aufgelöst und das Substrat phosphoryliert.

Das ATP dient als ein Energiespeicher, der etwa 40 % der beim Katabolismus freigewordenen Energie speichert, während die übrigen etwa 60 % der freigewordenen Energie für Sekundär- und Tertiärmetabolisierungen weiter zur Verfügung stehen bzw. auch eine Temperaturerhöhung im Bioreaktor bewirken können. Dem kann im Rahmen der Erfindung mit Vorteil bedarfsweise durch eine Herabsetzung der Temperatur im Fermenter durch eine verringerte Heizleistung entgegengewirkt werden. Die Temperatur im Bioreaktor kann also mit Vorteil unter Berücksichtigung der Wärmetönung der Metabolisierung durch eine Temperierung der Behandlungsflüssigkeit gesteuert oder geregelt werden.

Zur Temperierung kann insbesondere die Heizung dienen, mittels derer die Behandlungsflüssigkeit im Fermenter erwärmt wird. So kann insbesondere bei Einsatz sogenannter psychrophiler, psychrotropher und/oder mesophiler Bakterien als Mikroorganismen eine Temperatur in einem bevorzugten Bereich von 30 °C bis 65 °C im Reaktorraum eingestellt werden, die im Vergleich mit den für Biofiltern günstigen Temperaturen, die im Bereich von 15 °C bis 40 °C (in Sonderfällen von 8 °C bis 50 °C) liegen, höher gewählt werden kann und dadurch den Schadstoffabbau intensiviert.

Somit ist der in den Schadstoffen organisch gebundene Kohlenstoff, der bei der Metabolisierung der Bakterien unter den verfahrensgemäß vorliegenden aeroben Reaktionsvorgängen mit einem Sauerstoffanteil aus dem Abgas umgesetzt wird, der primäre Energielieferant für die Zellteilung, während Stickstoff und Phosphor an der zellinternen Umwandlung beteiligt sind und damit die Reaktionskinetik und -geschwindigkeit und damit die Effizienz des Schadstoffabbaus in erheblichem Maß beeinflussen.

Dabei ist ein molares Verhältnis der drei Elemente Kohlenstoff, Stickstoff und Phosphor zueinander (C:N:P-Verhältnis, cnp-value) als maßgebend für die Effektivität der erzielbaren Abbauleistung bei der biologisch-chemischen Abgasreinigung anzusehen. Dieses Verhältnis wird durch bei der Metabolisierung ablaufende Nitrifikations-/Denitrifikationsreaktionen sowie durch die Phosphorylierung des ADP bzw. eine unter Energiefreisetzung erfolgende Dephosphorylierung des ATP beeinflusst. Als Richtwert ist dabei gemäß der nachstehenden Gleichung (3) etwa von einem optimalen molaren Verhältnis

C : N : P = 100 : (5-8) : 1

auszugehen, wobei diese optimalen Verhältniszahlen jedoch temperaturabhängig und nicht konstant sind und daher in der vorgemischten Behandlungsflüssigkeit auch in einem Bereich (4) von

C : N : P = 100 : 2,5 bis 7,5 : 0,2 bis 3,0

modifiziert sein können.

Insbesondere durch eine separate manuelle Dosierung geeigneter saurer oder alkalischer Nährstoffe kann dabei auch eine Regelung des pH-Wertes im Fermenter erfolgen. Als Maß dafür, ob im Bioreaktor auch tatsächlich ein solches optimales Verhältnis vorliegt, kann dabei auch das Ergebnis einer Analyse der aus dem Bioreaktor austretenden gereinigten Abgase dienen.

Die für die bei der Abgasreinigung ablaufenden Reaktionen erforderlichen Agenzien von Nährstoffen, insbesondere Lösungen von Nitrat- und Phosphatsalzen, können automatisiert mittels technisch üblicher Dosiervorgänge und -einrichtungen als Mischung aus einem Vorratsbehälter dem Fermenter und dann erfindungsgemäß von dort mittels des befeuchteten Abgases als Träger dem Prozess im Reaktorraum zugeführt werden, wobei Sauerstoff und organisch gebundener Kohlenstoff die Energielieferanten für die Zellteilung sind und Stickstoff und Phosphor an der zellinternen Umwandlung beteiligt werden. Die in einem Zyklus freigesetzte Energie wird für den nächsten Zyklus der Zellteilungen benötigt.

Im Detail kann das erfindungsgemäße Verfahren beispielsweise folgendermaßen ablaufen: Nach einer Befüllung der insbesondere zylindrischen Reaktionskammer des Reaktorraumes mit Substraten wird der Befeuchtungs- und Fermentierbehälter mit angelieferten wässrigen Chemikalienlösungen befüllt. Diese Lösung enthält Bakterienstämme, die als Besatz mit den Chemikalien der Lösung eine Vorreaktion bereits in dem Fermenter eingehen. Die dabei eingesetzten Bakterienkulturen sind zum Zweck der Metabolisierung mit den erforderlichen Reaktionskomponenten versetz und werden nach dem Vorgang der Befeuchtung des Abgases im Fermenter / Wäscher in den Reaktor geleitet. Hier werden in diesem Stadium die Bakterienstämme durch die Kapillarkräfte der Füllkörper / Substrate immobilisiert. Dies ist daher nicht als sessile Assimilierung - wie bei organischen Füllstoffen gegeben - anzusehen. Nach dem Absterben einer Kolonie wird der Platz auf der Oberfläche der Granulatkapillaren durch neue Bakterienkolonien besiedelt. Mittels der zu diesem Zweck im Kreislauf geführten Behandlungsflüssigkeit kann die verendete Zellsubsfanz auch filtertechnisch aufgefangen werden. Dafür sind entsprechende Reinigungsmöglichkeiten - wie der bereits erwähnte Sumpfablass und ein darüber angeordneter dem Abpumpen der Behandlungsflüssigkeit dienender Abführstutzen - vorgesehen. Die im Abgas gelösten Schadstoffe, speziell organische Lösemittel, lagern sich bei der Passage durch den Granulatschrot und seine Kapillaren an die wässrige schleimartige Oberfläche des Bakterikums an. Hier wirken Kräfte der Wasserstoffbrückenbindung, elektrostatische Kräfte oder auch Van-der-Waals'sche Wechselwirkungen zwischen den Grenzschichten "Bakterikum - schleimige Übergangsschichten - Wasser - Luft - Schadstoffe". Dabei können einige Schadstoffe eine sehr gute Wasserlöslichkeit besitzen, andere nur eine mäßige, und wieder andere gar keine.

Um die in der VDI 3479 genannten, schlecht in Wasser löslichen Stoffe, z. B. Xylole, Toluol, Essigsäureethylacetat oder aliphatische Kohlenwasserstoffe abbauen zu können, werden diese Stoffe mit Zusätzen von gut in Wasser lösbaren Stoffen versetzt. Diese können über eine vorzugsweise verschließbare Zugabeöffnung des Fermenters zum manuellen Einbringen der Zusatzstoffe zugegeben werden. Durch solche Zusätze, wie etwa Aceton, Isopropanol oder andere Alkohole bzw. Ketone, werden die biologischen Abbauraten erheblich verbessert und die Effektivität des erfindungsgemäßen Verfahrens weiter gesteigert. Durch die apparative Ausbildung des Bioreaktors und der gesamten Anlage, welche erfindungsgemäß besonders durch eine leichte Handhabbarkeit und ein hohes Maß an Bedienungskomfort gekennzeichnet sind, kann dies praktisch umgesetzt werden.

Die Startbedingungen für die Reaktionsabläufe zur Gasreinigung können unmittelbar im Zutrittsbereich der Rohgaseinströmung in den Bioreaktor in geeigneter Weise eingestellt werden. Über die Beheizung des Fermenters herrscht dort beispielsweise dann eine Temperatur von 50 °C zu Beginn des Stoffwechsels. Dieser Energieeintrag startet und beschleunigt die Metabolisierung.

Weitere vorteilhafte Ausführungen der Erfindung sind in den Unteransprüchen und in der nachfolgenden detaillierten Beschreibung enthalten.

Anhand der durch die beiliegende Zeichnung veranschaulichten Ausführungsbeispiele wird die Erfindung näher erläutert. Dabei zeigen:
- Fig. 1: ein Schema einer Ausführungsform einer erfindungsgemäßen Anlage zur chemisch-biologischen Reinigung von Abgasen nach dem erfindungsgemäßen Verfahren und unter Einsatz eines geschnitten dargestellten erfindungsgemäß ausgebildeten Bioreaktors,
- Fig. 2: in einer Fig. 1 entsprechenden Darstellung, eine Seitenansicht des erfindungsgemäß ausgebildeten Bioreaktors,
- Fig. 3: eine perspektivische Darstellung einer bevorzugten Ausführung eines Fermenters eines erfindungsgemäßen Bioreaktors,
- Fig. 4: in einer Fig. 3 entsprechenden Darstellung, eine Seitenansicht des Fermenters,
- Fig. 5: eine vergrößerte Einzelheit aus Fig. 4,
- Fig. 6: einen Längsschnitt einer bevorzugten Ausführung eines Luftverteilers eines erfindungsgemäßen Bioreaktors,
- Fig. 7: in einer Fig. 6 entsprechenden Darstellung, eine perspektivische Ansicht des Luftverteilers,
- Fig. 8: eine vergrößerte Einzelheit des erfindungsgemäßen Bioreaktors aus Fig. 1,
- Fig. 9: eine weiter vergrößerte Einzelheit aus Fig. 8,
- Fig. 10: eine Draufsicht auf den erfindungsgemäßen Bioreaktor gemäß Fig. 8,
- Fig. 11: eine weiter vergrößerte Einzelheit aus Fig. 10,
- Fig. 12: eine noch weiter vergrößerte perspektivische Darstellung der in Fig. 11 gezeigten Einzelheit.

In den verschiedenen Figuren der Zeichnung sind dieselben Teile auch stets mit denselben Bezugszeichen versehen und werden daher in der Regel auch jeweils nur einmal beschrieben. Dabei wird zu der anschließenden Beschreibung ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich eine erfinderische Bedeutung haben.

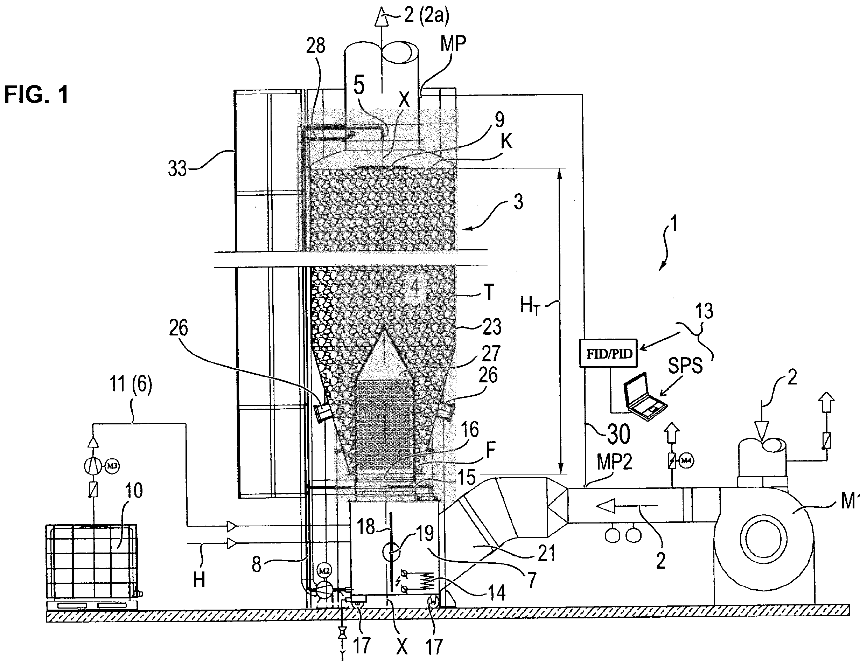

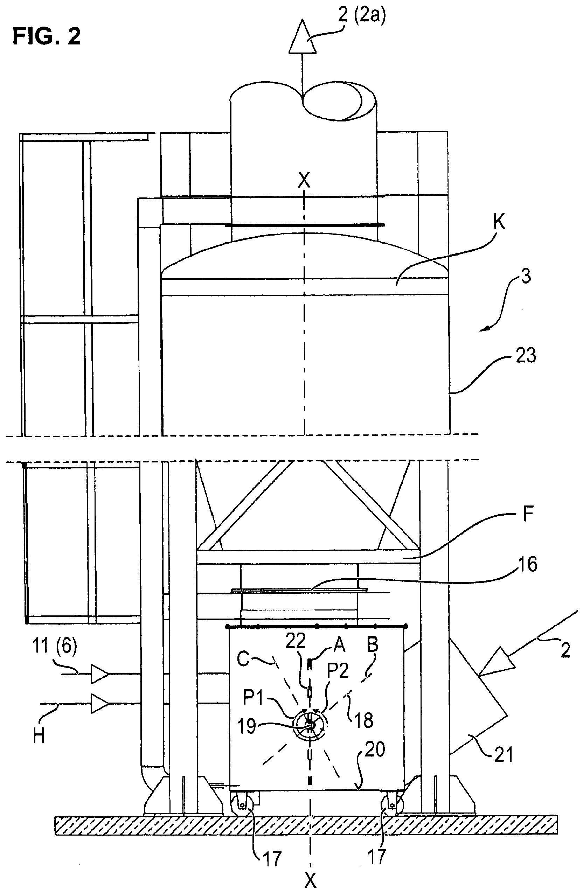

Wie zunächst Fig. 1 und 2 veranschaulichen, kann in einer erfindungsgemäßen Anlage 1 zur chemisch-biologischen Reinigung von Abgasen 2, insbesondere mittels eines erfindungsgemäßen Bioreaktors 3, ein erfindungsgemäßes Verfahren realisiert werden.

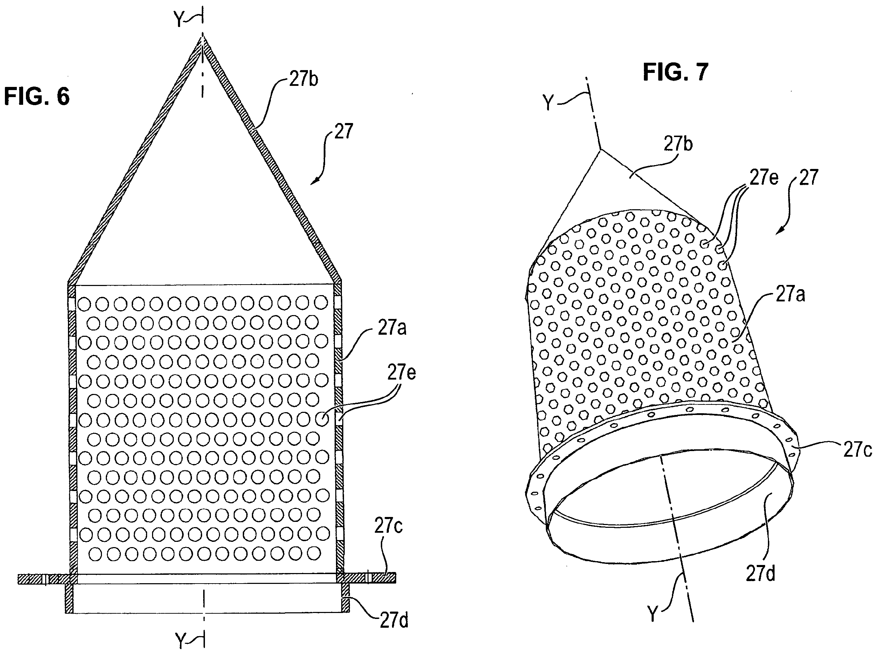

Bei dem erfindungsgemäßen Bioreaktor 3, auf den sich auch die Fig. bis Fig. 7 beziehen handelt es sich um einen Reaktor 3, dessen Reaktorraum 4 aus einer insbesondere zylindrischen, vom Abgas 2 durchströmbaren Kammer gebildet ist, wobei das Abgas 2 den Bioreaktor 3 vertikal von einem unten liegenden Fuß F nach einem oben liegenden Kopf K durchströmt. Mit der Erfindung kann bei Vorhandensein des zu einer hocheffektiven Reinigung notwendigen apparativen Aufwands eine Minimalisierung des Bauraums sowie auch des Herstellungsaufwands erreicht werden.

Das erfindungsgemäße Verfahren kann mit konstanter Schadstofffracht und gleichbleibenden Stoffbelastungen im Abgas 2 oder auch bei Selbstüberwachung und Steuerung erfolgen, wobei im Abgas 2 schwankende Zusammensetzungen und Konzentrationen der Schadstoffe auftreten.

In der Anlage 1 kann zur gesamten Gasförderung ein zentraler Zuluftventilator M1 vorgesehen sein, der - technologisch gesehen - vor dem Bioreaktor 3 angeordnet ist und das Abgas 2 durch den Bioreaktor 3 bläst.

Das erfindungsgemäße Verfahren kann mit Vorteil zur Reinigung der Abgase 2 aus Anlagen der kommunalen und industriellen Abwasserreinigung, der Abfallverwertung, der Lebensmittelverarbeitung, der Schlammtrocknung oder von anderen Deponien, der Biogasproduktion, der Futtermittelproduktion, der Tierkörperverwertung, in Schlachthöfen sowie für geruchsbelastete Produktionsabluft, speziell von Abgasen 2 aus Lackieranlagen oder Anlagen der chemischen Industrie, sowie auch zur Reinigung von beispielsweise nach einer Havarie mit flüchtigen organischen Stoffen verschmutztem Erdreich, eingesetzt werden. Auch ist vorteilhafterweise ein Einsatz zur Entfernung von Öllachen auf Gewässern möglich.

In dem erfindungsgemäßen Verfahren werden als Emissionen angefallene, in den Abgasen 2 enthaltene Verbindungen hinsichtlich ihrer chemischen Zusammensetzung und Menge im Abgas 2 bestimmt und in mindestens einem Reaktorraum 4 des Bioreaktors 3 abgebaut. In dem Bioreaktor 3 ist auf einem inerten Trägermaterial T ein Biofilm mit mindestens einer Art von zum Abbau der organischen Verbindungen geeigneten Mikroorganismen angesiedelt.

Als Trägermaterialien T eignen sich dabei partikelförmige oder strukturierte, mineralische oder synthetische Träger T mit hoher Porosität und spezifischer Oberfläche. Es werden Materialien verwendet, die inert sind, d. h. die chemisch indifferente Eigenschaften besitzen und nicht als Energieträger für den Prozess der Metabolisierung geeignet sind. Derartige Träger T sind an sich bekannt, im Handel erhältlich und beispielsweise in der oben erwähnten VDI-Richtlinie VDI 3478 beschrieben. Der Einsatz von biologischen Trägermaterialien, wie von Rindenmulch oder Hackschnitzeln, kann vorteilhafterweise vermieden werden. Insbesondere kommen Lava-Granulat bzw. -schrot oder geformte Kunststoffelemente als Träger T in Betracht.

Die Bestimmung der chemischen Zusammensetzung und Menge der Schadstoffe im Abgas 2 kann dabei durch Messungen oder durch rechnerische Ermittlungen der Abgasfremdstoffe erfolgen. Die Schadstoffmessungen in den Abgasen 2 dienen zur Feststellung der Schadstoffe nach ihrer Art und nach ihren Konzentrationen. Bei Gasen und Dämpfen organischer Verunreinigungen können beispielsweise Gasproben entnommen und diese gaschromatographisch ausgewertet werden. Bei organischen Stäuben können die Mengenanteile durch gravimetrische Zählungen ermittelt werden. Im Falle zu planender Anlagen mit unbekannter Schadstoffart und unbekannter Quantität kann für organische Dämpfe eine Berechnung in Anlehnung an die VDI 3479 ("Emissionsminderung - Raffinierte Mineralölläger") vorgenommen werden. Hinsichtlich der Qualität kann dabei eine Angabe in mg/Nm³ für jeden der einzelnen Schadstoffe erfolgen und hinsichtlich der Quantität kann insbesondere der Massenstrom der organisch gebundenen Kohlenstoffanteile in kg C/h angegeben werden.

Das Trägermaterial T und der Biofilm werden mittels mindestens einer Befeuchtungseinrichtung 5, 7 mit einer wässrigen Behandlungsflüssigkeit 6 befeuchtet. Erfindungsgemäß ist dabei vorgesehen, dass das Abgas 2 vor seinem Eintritt in den Bioreaktor 3 mit der Behandlungsflüssigkeit 6 befeuchtet wird, so dass bereits befeuchtetes Abgas 2 in den Reaktorraum 4 gelangt. Wie dargestellt wird dabei die Befeuchtung des Abgases 2 im Fermenter 7 vorgenommen, indem vorzugsweise eine geregelte Menge des Abgases 2 im Fermenter 7 mit der Behandlungsflüssigkeit 6 in Kontakt gebracht wird. Somit wird das befeuchtete Abgas 2 mit der zur Befeuchtung des inerten Trägermaterials T und des Biofilms dienenden Behandlungsflüssigkeit 6 im Bioreaktor 3 im Gleichstrom geführt. Im Bioreaktor 3 gegebenenfalls vorhandene, überschüssige Behandlungsflüssigkeit 6 kann dabei aber im Sinne eines Gegenstroms auch aus dem Bioreaktor 3 in den Fermenter 7 zurücktropfen.

In der Zeichnung ist neben dem erfindungsgemäß als Befeuchtungseinrichtung 7 sowie auch als Gaswäscher 7 dienenden Fermenter 7 eine weitere, optional mit Vorteil vorhandene Befeuchtungseinrichtung 5 dargestellt, die sich am Kopf K des Reaktorraumes 4 befindet. Diese zweite Befeuchtungseinrichtung 5 dient insbesondere einer periodisch erfolgenden Wartung und wird im Allgemeinen - auch, wenn dies im Sinne einer zusätzlichen Befeuchtung des Trägermaterials T möglich wäre - während des kontinuierllich erfolgenden Abgasreinigungsprozesses nicht eingesetzt. Die zweite Befeuchtungseinrichtung 5 ist durch ein oberseitiges Ende einer vom Fermenter 7 zum Kopf K des Reaktorraumes 4 führenden, mit einer Pumpe M2 ausgerüsteten Steigleitung 8 für die Behandlungsflüssigkeit 6 gebildet. Unter dem als Befeuchtungseinrichtung 5 dienenden oberseitigen Ende der Steigleitung 8 ist über dem inerten Trägermaterial T und dem Biofilm im Reaktorraum 4 eine vorzugsweise aus Stahl bestehende Prall- und Verteilerplatte 9 für die Behandlungsflüssigkeit 6 angeordnet. Diese kann vorzugsweise 40 % bis 75 % des freien Querschnitts des Reaktorraums 4 abdecken und gewährleistet mit Vorteil eine Vergleichmäßigung der Strömung der Behandlungsflüssigkeit 6, ohne dass dazu ein Düsensystem eingesetzt werden müsste.

An den Fermenter 7 ist ein Vorratsbehälter 10 zur Dosierung der Behandlungsflüssigkeit 6 angeschlossen. Dabei handelt es sich vorzugsweise um eine vorgemischte Flüssigkeit aus Mikroorganismen und Nährstoffen, wie Stickstoffspendern, Phosphorspendern, Spurenelemente-Lieferanten und/oder Kohlenstoff-Lieferanten, insbesondere Stärke, die mittels einer Pumpe M3 durch eine Leitung 11 in den Fermenter 7 eingebracht werden kann.

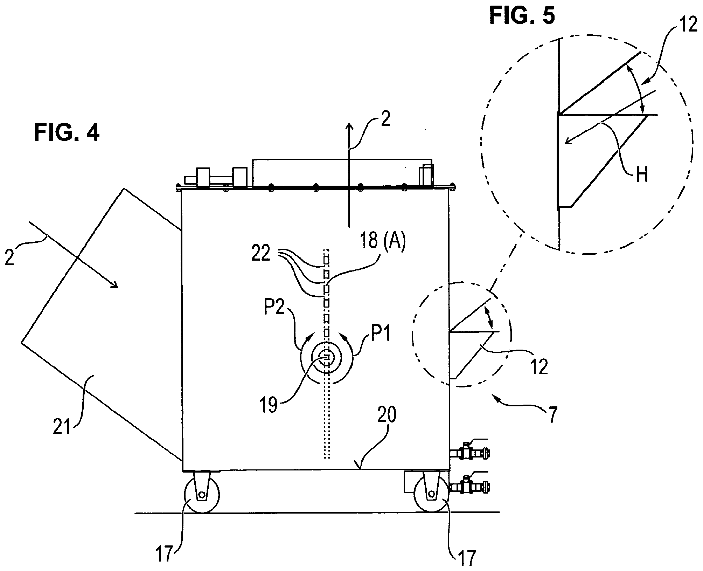

Außerdem kann auch eine separate manuelle Dosierung von Hilfsstoffen H vorgesehen sein. So zeigen insbesondere Fig. 4, und Fig. 5 vergrößert eine sich insbesondere seitlich am Fermenter 7 befindliche, vorzugsweise verschließbare Zugabeöffnung 12 für derartige Hilfssstoffe H, die es gestattet, entsprechend der chemischen Zusammensetzung und Menge der im Abgas 2 enthaltenen Verbindungen beispielsweise Löslichkeitsvermittler und/oder Zusatzstoffe zur Einstellung des pH-Wertes in den Fermenter 7 einzubringen. Dadurch können die biologischen Abbauraten weiter verbessert und die Effektivität gesteigert werden.

Der erfindungsgemäßen Anlage 1 ist den Abgasleitungen eine Erfassungseinrichtung (Bezugszeichen "PID/FID") zugeordnet, in der die als Emissionen angefallenen, in den Abgasen 2 enthaltenen Verbindungen hinsichtlich ihrer chemischen Zusammensetzung und Menge im Abgas 2 bestimmt werden. Diese ist in der erfindungsgemäßen Anlage 1 gemäß Fig. 1 schematisch dargestellt und für einen kontinuierlichen bzw. zumindest zyklischen Betrieb als Bestandteil einer Steuer- und Regelvorrichtung 13 in-line geschaltet. Die Erfassungseinrichtung FID/PID insbesondere einen Flammionisationsdetektor FID oder einen Photoionisationsdetektor PID umfassen. Entsprechend den Signalen aus der Erfassungseinrichtung PID/FID kann in Abhängigkeit von der chemischen Zusammensetzung und Menge der Schadstoffe im Abgas 2 mittels der Vorrichtung 13 zur Steuerung und/oder Regelung ein Befeuchtungsgrades des Abgases 2 im Fermenter 7 eingestellt werden. Auch eine entsprechende Steuerung und/oder Regelung der Temperatur im Fermenter 7 ist damit vorteilhafterweise möglich. Die Metabolisierungsreaktionen im Reaktorraum 4 bzw. auch schon Vormetabolisierungsreaktionen im Fermenter 7, wie die oben beschriebene Primärmetabolisierung nach der oben aufgeführten Gleichung (2), können dadurch gesteuert werden. Hierbei kann mit Vorteil auch eine speicherprogrammierbare Steuerung SPS zur Steuerung und Regelung des Befeuchtungsvorgangs des Abgases 2 und/oder der Temperatur im Fermenter 7 und/oder im Reaktorraum 4 des Bioreaktors 3 zum Einsatz kommen. So können die chemische Zusammensetzung und Menge der als Emissionen im Abgas 2 enthaltenen Verbindungen vor und nach der Reinigung des Abgases 2 miteinander und/oder mit einem festgelegten Richtwert verglichen und daraus nach einer in der SPS niedergelegten Regel Steuersignale für die Befeuchtung und Temperierung des Abgases 2 gebildet werden.

Ein Spezifikum der dargestellten Ausführung besteht dabei darin, dass durch parallele Messungen im Reingas 2a (Messpunkt MP1) und im Rohgas 2 (Messpunkt MP2) eine Bestimmung der schwankenden Konzentrationen bzw. Schadstoffarten erfolgt. Es ist also vorgesehen, dass auch in dem gereinigten Abgas 2a, nachdem dieses aus dem Bioreaktor 3 ausgetreten ist, eine weitere Bestimmung der chemischen Zusammensetzung und Menge eines gegebenenfalls vorhandenen Restanteils der ursprünglich enthaltenen Verbindungen erfolgt. Dies kann - wie im Rohgas 2 - bevorzugt unter Einsatz der Gaschromatographie und/oder mit einem Flammenionisationsdektektor (FID) bzw. einem Photoionisationsdetektor (PID) als schreibenden Messgeräten erfolgen. Die Messungen können im Online-Verfahren kontinuierlich oder mindestens einmal stündlich vorgenommen werden, wobei das jeweilige Messgerät ein Referenzsignal über den im Abgas 2 enthaltenen organisch gebundenen Kohlenstoffanteil in den Schadstoffen liefert.

Ein Flammenionisationsdetektor (Abkürzung und Bezugszeichen in Fig. 1: FID) ist ein Detektor für organische Verbindungen, der überwiegend in Verbindung mit Gaschromatographen (GC) eingesetzt wird. Sein Funktionsprinzip besteht in der Messung der Leitfähigkeit einer Knallgasflamme zwischen zwei Elektroden. Zu analysierende Substanzen werden mit einem Trägergasstrom in die Flamme transportiert und dort thermisch ionisiert. Die bei der Ionisierung freiwerdenden Elektronen werden mittels eines Gitters, das um die Flamme angebracht ist, aufgefangen und durch einen angeschlossenen Schreiber oder ein Datensystem als Peak aufgezeichnet. Der FID ist ein Detektor, der Robustheit mit hoher Empfindlichkeit verbindet. Sein Signal ist über einen weiten Konzentrationsbereich linear proportional zur Menge des Kohlenstoffgehaltes in einem Analyten. So kann die Konzentration eines Kohlenwasserstoffs aus dem Signal ohne Kalibrierung abgeschätzt werden, und der Detektor kann gut zur Quantifizierung organischer Schadstoffe verwendet werden. Ein Photoionisationsdetektor (Abkürzung und Bezugszeichen in Fig. 1: PID) ist ein Gerät zur Erkennung und Analyse von chemischen Verbindungen in der Luft. Beispielsweise sind mittels des PID aromatische Kohlenwasserstoffe, einige gängige Lösungsmittel und eine Vielzahl von unterschiedlichen anorganischen, vor allem aber organischen Substanzen nachweisbar. Ein PID saugt mittels einer Pumpe die Umgebungsluft ein und setzt diese dem UV-Licht einer Gasentladungslampe aus. Wenn ionisierbare Substanzen in der Luft vorhanden sind, wird dies als Konzentration auf dem Display angezeigt. Die Belastung des Abgases 2 durch die Schadstoffe kann so festgestellt werden.

Die Weiterverarbeitung der gewonnenen Messsignale kann dann - wie erwähnt - bevorzugt unter Einsatz einer speicherprogrammierbaren Steuerung (Abkürzung und Bezugszeichen in Fig. 1: SPS) vorgenommen werden. Die SPS kann die erfindungsgemäße Anlage 1 überwachen und steuern und den technologischen Ablauf unter Kontrolle der einzuhaltenden Toleranzen aufzeichnen. Im Bereich der Speicher der SPS kann dabei zwischen aktiven und aktuellen Datenspeichern für die Durchführung der Messaufgaben und Kalkulationen und den Datenspeichern zur Ablage von Daten der messtechnischen Überwachungen sowie den Dosierungen unterschieden werden. In einer wissenbasierten Datenbank der SPS können auch mathematische Modelle der Reaktionskinetik und der Wärmetönung von unter verschiedenartigen Randbedingungen im Reaktorraum 4 möglichen Metabolisierungvorgängen niedergelegt sein und zur Steuerung und Regelung eingesetzt werden. Das Programm der SPS verknüpft und koordiniert somit die ablaufenden Vorgänge und sorgt für eine hohe Effizienz der erfindungsgemäßen Anlage 1.

Durch eine bevorzugte Temperierung, insbesondere im Bereich von 30 °C bis 65 °C oder sogar bis 70 °C, kann dabei die Reaktionsgeschwindigkeit im Reaktorraum 4 optimal hoch eingestellt werden. Die Tempererierung der Behandlungsflüssigkeit 6 kann dabei vorzugsweise - wie dargestellt - durch eine Heizung 14 erfolgen, in welcher beispielsweise Heizrohre vorgesehen sind, mittels derer die Behandlungsflüssigkeit 6 im Fermenter 7 erwärmt wird. Auch ist es möglich, durch eine nicht dargestellte Heizung im Reaktorraum 4 je nach Erfordernis entweder eine sehr homogene Temperaturverteilung im Reaktorraum 4 oder auch einen Temperaturgradienten einzustellen. Auch hierzu kann die SPS eingesetzt werden. Ebenso kann ein Protokoll des gesamten technologischen Ablaufs in einer Datenbank der SPS hinterlegt werden.

Konstruktiv gesehen befindet sich der Fermenter 7 unter dem Reaktorraum 4 des erfindungsgemäßen Bioreaktors 3. Er kann dabei direkt an der Unterseite des Fußes F angeflanscht sein oder aber es kann mit Vorteil, insbesondere im Sinne einer einfachen Austauschbarkeit des den Fermenter 7 bildenden Behälters, vorgesehen sein, dass der Fermenter 7 über ein Kompensatorteil 15 konstruktiv behälterdicht angebunden wird, wie dies Fig. 1 zeigt. Das Kompensatorteil 15 kann dabei insbesondere aus einem elastomeren Material bestehen und/oder als Faltenbalg ausgebildet sein, wobei es gasdicht mit einer an einem Fuß F des Reaktorraumes 4 befindlichen Eintrittsöffnung 16 für das Abgas 2 lösbar verbunden ist.

Im Sinne einer einfachen Austauschbarkeit des den Fermenter 7 bildenden Behälters kann - wie in Fig. 1, 2 und 4 gezeigt, vorteilhafterweise auch vorgesehen sein, dass der Fermenter 7, insbesondere durch an seiner Unterseite montierte Räder 17, verfahrbar ist.

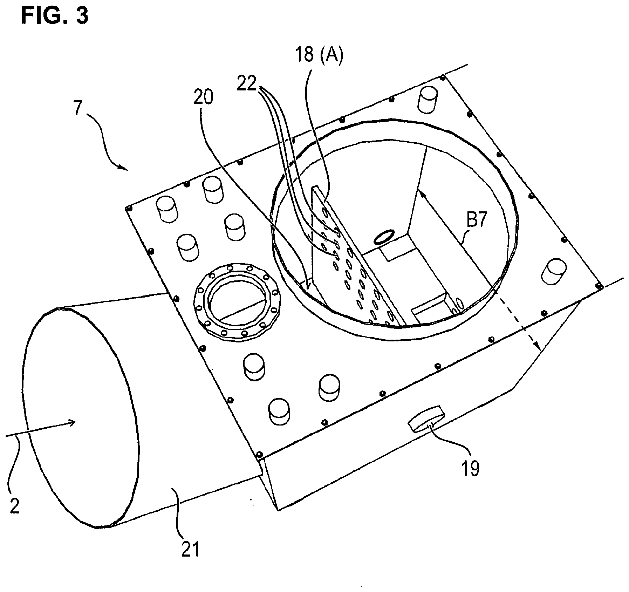

Um in dem Fermenter 7 eine Steuerung bzw. Regelung des Befeuchtungsgrades des Abgases 2 vornehmen zu können, ist eine in die Behandlungsflüssigkeit 6 eintauchende, insbesondere zumindest teilweise perforierte, Regelklappe 18 vorgesehen. Diese ist in Fig. 1 bis 4 dargestellt, figürlich jedoch am besten aus der perspektivischen Darstellung in Fig. 3 ersichtlich. Die Klappe 18 ist plattenförmig ausgebildet und über Gelenke 19 - in einer Ruhestellung "A" vertikal ausgerichtet - im Fermenter 7 verschwenkbar (Pfeile P1, P2 in Fig. 2 und Fig. 5) aufgehängt. Sie kann sich dabei bevorzugt über die gesamte Breite B7 und bis zum Boden 20 des Fermenters 7 erstrecken. Der Befeuchtungsgrad wird dabei durch die Klappenstellung gesteuert, wobei dadurch eine - je nach Stellung (z. B. Stellungen "A", "B" und "C" in Fig. 2) - mehr oder weniger große Menge an Abgas 2 durch die Behandlungsflüssigkeit 6 geführt wird. Für das Abgas 2 ist insbesondere ein seitlicher, schräg von oben kommender Gaseintrittsstutzen 21 am Fermenter 7 vorgesehen. Die Klappe 18 kann in ihren verschiedenen Schwenkstellungen gestuft oder kontinuierlich festgelegt werden, so dass sie nicht durch das Abgas 2, sondern entsprechend einem Steuersignal aus der Steuer- und Regelvorrichtung 13 ausgerichtet ist.

In einer ausgelenkten Stellung ("B") ist die Klappe 18 parallel zur Strömungsrichtung des Abgases 2 ausgerichtet, so dass eine maximale Menge an Abgas 2 durch die Behandlungsflüssigkeit 6 geführt wird. Der Befeuchtungsgrad erreicht somit ebenfalls ein Maximum. In einer nach der anderen Seite hin ausgelenkten Stellung ("C") ist die Klappe 18 quer zum Gasstrom ausgerichtet, so dass nur eine minimale Menge an Abgas 2 durch die Behandlungsflüssigkeit 6 geführt wird. In dieser Stellung gibt die Klappe 18 einen maximal großen Querschnitt für den Weg des Abgases 2 über die Behandlungsflüssigkeit 6 hinweg in Richtung auf die am Fuß F des Reaktorraumes 4 angeordnete Eintrittsöffnung 16 für das Abgas 2 frei. Der Befeuchtungsgrad erreicht somit ebenfalls nur ein Minimum. Ein mittlerer Wert des Befeuchtungsgrades kann dadurch eingestellt werden, dass die Klappe 18 in die zwischen den beiden Stellungen "B" und "C" liegende, vertikale Stellung "A" gebracht wird. Ihre Längserstreckung ist dabei insbesondere koaxial mit der Mittenachse X-X des Reaktorraumes 4 ausgerichtet, so dass dadurch die Hälfte der Eintrittsöffnung 16 für das Abgas 2 freigegeben wird. Aufgrund der in der Klappe 18 in ihrem oberen, vorzugsweise nicht in die Behandlungsflüssigkeit eintauchenden Teil vorhandenen Perforation 22 wird durch das Gebläse M1 auch ein Teil des Abgases 2 durch die Klappe 18 hindurch geblasen. Dies geschieht im Übrigen auch in der vorbeschriebenen Stellung "B" der Klappe 18.

Durch die Größe des perforierten Bereichs 22 und die Lochgröße kann ein auf den Gasstrom abgestimmter maximaler Strömungswiderstand der Regeklappe 18 eingestellt werden.

Der Reaktorraum 4 ist in bevorzugter Ausbildung von einem in der Grundgestalt zylindrisch ausgebildeten, vertikal ausgerichteten und in einem unteren Bereich auf seine Eintrittsöffnung 16 für das Abgas 2 hin konisch zulaufenden Mantel 23 umgeben, im Bereich des Kopfes K durch einen Deckel 24 verschlossen, wobei sich darin ein Abzugskamin 25 für das gereinigte Abgas 2a befindet.

Außerdem sind im Mantel 23 des Reaktorraums 4, insbesondere in dessen unterem, konisch ausgebildeten Bereich, zwei verschließbare Mannlöcher 26 ausgebildet ist, durch die mit Vorteil eine direkte Zugänglichkeit zum Reaktorraum 4 und bedarfsweise eine Entnahmemöglichkeit für das Trägermaterial T gegeben. Auch kann durch die Präsenz von mindestens einem verschließbaren Mannloch 26 mit Vorteil bedarfsweise eine Umschichtung des Trägermaterials T vorgenommen werden, um Vorzugssströmungskanäle, die sich gegebenfalls während des Betriebs in unerwünschter Weise gebildet haben können, zu zerstören.

Es kann in nicht dargestellter Weise vorgesehen sein, dass der Reaktorraum 4 unterseitig einen seine Eintrittsöffnung 16 für das Abgas 2 verschließenden perforierten Boden aufweist.

In bevorzugter, und auch in der Zeichnung dargestellter Ausführung ist jedoch vorgesehen, dass in einem unteren Bereich des Reaktorraums 4 ein Luftverteiler 27 angeordnet ist, durch den ein Strom des aus dem Fermenter 7 kommenden Abgases 2 vor seinem Eintritt in den mit dem inerten Trägermaterial T gefüllten Bereich des Reaktorraum 4 in eine Vielzahl von Teilströmen aufgeteilt wird. Der Anwesenheit und der konstruktiven Ausbildung eines derartigen Luftverteilers 27, welcher im Einbau in Fig. 1 und als Einzelteil in verschiedenen Ansichten in Fig. 5 und 6 gezeigt ist, wird eine eigenständige erfinderische Bedeutung beigemessen, die unabhängig von der erfindungsgemäßen Weise der Befeuchtung der Abluft 2 ist.

Der Luftverteiler 27 ist aus einem in der Grundgestalt insbesondere hohlzylindrisch ausgebildeten, im Einbau vertikal ausgerichteten, perforierten unteren GaseintrittsAbschnitt 27a für das Abgas 2 und einem nach oben hin konisch spitz zulaufenden, vertikal ausgerichteten, insbesondere massiven Stützabschnitt 27b für das inerte Trägermaterial T gebildet. Der massive Stützabschnitt 27b kann dabei - in axialer Richtung gesehen - ein Viertel bis halb so lang sein wie der zylindrische GaseintrittsAbschnitt 27a.

Im Einbau ist die Längsachse Y-Y des Luftverteilers 27 bevorzugt konzentrisch mit der Mittenachse X-X des Reaktorraumes 4 angeordnet, wobei der Luftverteiler 27 in das Innere des Reaktorraums 4 hineinragt. In vertikaler Richtung kann er sich dabei insbesondere über 10 % bis 40 % der Höhe H_{T} des mit dem inerten Trägermaterial T ausgefüllten Raumes erstrecken. Dabei kann sich in strömungstechnisch optimaler Weise zwischen dem konischen Bereich des Mantels 23 des Reaktorraumes 4 und dem Luftverteiler 27 - wie Fig. 1 veranschaulicht - ein sich nach oben in axialer Richtung X-X stetig erweiternder Ringraum ausbilden.

Die Aufteilung des in axialer Richtung Y-Y in den Luftverteiler 27 eintretenden Stromes des Abgases 2 in eine Vielzahl von Teilströmen wird über die Perforation 27e des hohlzylindrischen Abschnitts 27a realisiert, über dessen gesamte axiale Länge das Abgas 2 in radialer Richtung in den mit dem inerten Trägermaterial T gefüllten Bereich des Reaktorraum 4, insbesondere in den Ringraum eintritt. Mittels des Luftverteilers 27 kann ein optimal gleichmäßiges Strömungsbild des Abgasstromes im Reaktorraum 4 eingestellt werden, welches einen maximalen Schadstoffabbau durch den erfindungsgemäßen Bioreaktor 3 fördert.

Zur Befestigung am Mantel 23 des Reaktorraums 4 kann der Luftverteiler 27 - wie insbesondere Fig. 6 und 7 entnommen werden kann - einen umfangsgemäßen Befestigungsflansch 27c aufweisen. Über einen im Einbau darunter liegenden, nicht perforierten hohlzylindrischen endständigen Montageabschnitt 27d ist der Luftverteiler 27 insbesondere mit dem Kompensatorteil 15 verbindbar, wie dies in Fig. 1 dargestellt ist.

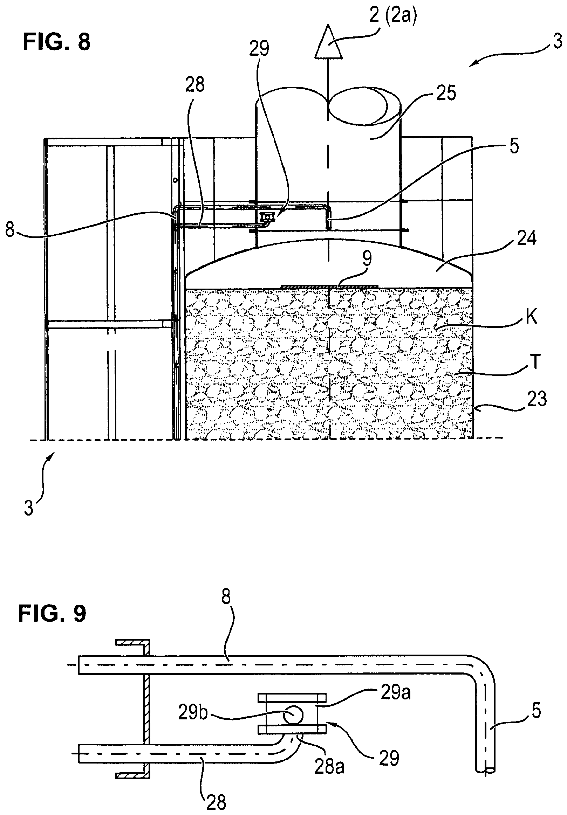

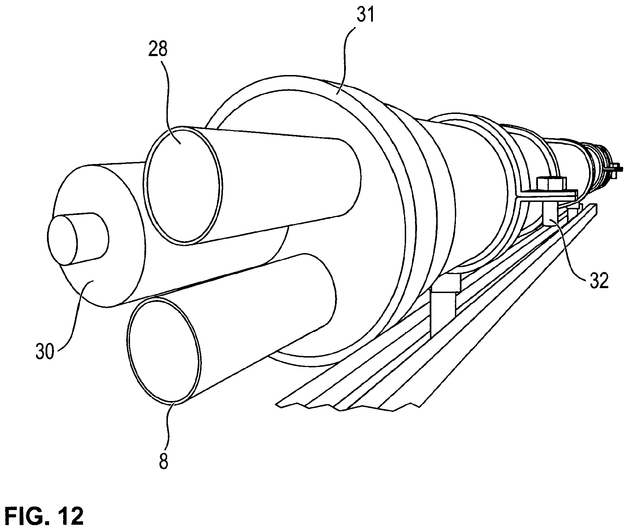

Die Erfindung ist nicht auf das dargestellte und beschriebene Ausführungsbeispiel beschränkt, sondern umfasst auch alle im Sinne der Erfindung gleichwirkenden Ausführungen. Außerdem kann der Fachmann auch weitere zweckmäßige technische Maßnahmen vorsehen, ohne dass der Rahmen der Erfindung verlassen wird. Eine derartige Maßnahme ergibt sich beispielsweise aus Fig. 1 sowie Fig. 8 bis Fig. 12, wonach vorgesehen ist, dass der Reaktorraum 4 über eine vom Kopf K des Reaktorraumes 4 zum Fermenter 7 führende Überlaufleitung 28 für die Behandlungsflüssigkeit 6 mit dem Fermenter 7 verbunden ist. Diese vom Kopf K des Reaktorraumes 4 zum Fermenter 7 führende Überlaufleitung 28 kann durch ein Sicherheitsventil 29 verschlossen sein, welches sich selbsttätig bei einem eventuell eintretenden zu hohen Pegelstand der Behandlungsfüssigkeit 6 im Reaktorraum 4 öffnet. Um dies zu gewährleisten kann - wie dies in vergrößerter Darstellung Fig. 9 zeigt - vorgesehen sein, dass das Sicherheitsventil 29 durch eine in einem Gehäuse 29a gehaltene, in einem nach oben offenem, oberseitigem Ende 28a der Überlaufeitung 28 liegende, insbesondere aus Stahl bestehende Hohlkugel 29b gebildet ist. Bei zu hohem Flüssigkeitsstand bewegt sich die Hohlkugel 29b aufgrund ihres Auftriebs nach oben und gibt die Überlaufleitung 28 frei, so dass die Flüssigkeit 6 in den Fermenter 7 zurücklaufen kann.

Im Zusammenhang mit der Präsenz der Überlaufeitung 28 sowie der weiter oben beschriebenen Steigleitung 8 für die Behandlungsflüssigkeit 6 kann die erfindungsgemäße Anlage 1 bzw. das erfindungsgemäße Verfahren noch ein weiteres Spezifikum mit eigenständiger erfinderischer Bedeutung aufweisen. Es kann nämlich bevorzugt mit Vorteil vorgesehen sein, dass durch einen Messstrom des Abgases 2, der in einer, insbesondere als Messschlauch ausgebildeten, Messleitung 30 geführt ist, durch eine Führung dieser Messleitung 30 mit mindestens einer Rohrleitung für die Behandlungsflüssigkeit 6, also beispielsweise mit der Überlaufeitung 28 und/oder mit der Steigleitung 8, in einem gemeinsamen Hüllrohr 31 die Behandlungsflüssigkeit 6 temperiert wird.

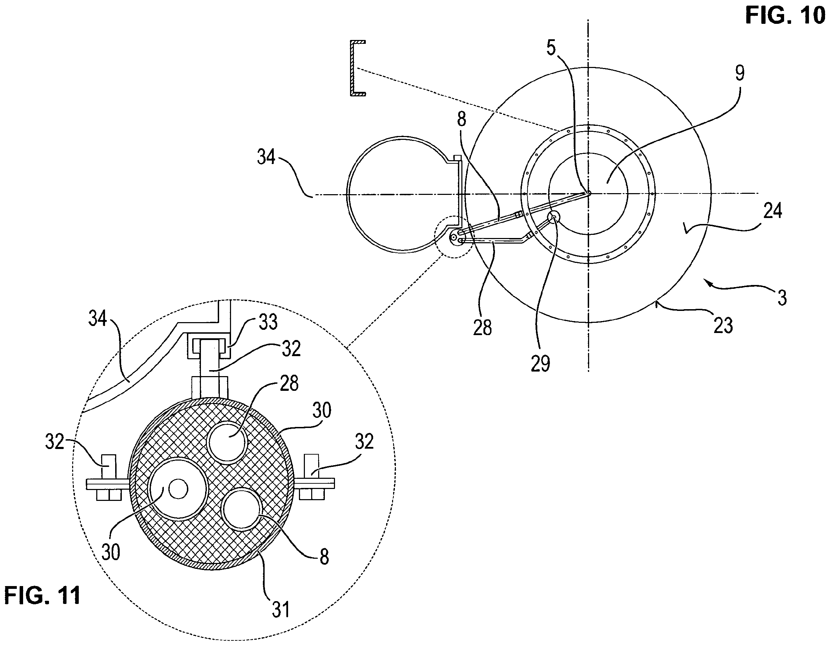

Diese Ausführung, auf welche sich insbesondere Fig. 10 bis Fig. 12 beziehen, ist in Fig. 1 nicht dargestellt, jedoch sind dort die entsprechenden Messleitungen des ungereinigten und des gereinigten Abgases 2, 2a jeweils mit dem Bezugszeichen 30 gekennzeichnet.

Bei der gemeinsamen Führung von Gas 2 und Flüssigkeit 6 werden in energiesparender Weise die Tatsachen ausgenutzt, dass einerseits sowohl ein Messgasstrom des Abgases 2, als auch die Behandlungsflüssigkeit 6 von einem Bereich in der Nähe des Kopfes K nach unten bzw. von unten nach oben geführt werden, und dass andererseits das Abgas 2 in seinen Messleitungen 30 eine höhere Temperatur als die Behandlungsflüssigkeit 6, insbesondere eine Temperatur von 180 °C aufweisen, muss. Durch die gemeinsame Führung einer oder bevorzugt beider Leitungen 8, 28 für die Behandlungsflüssigkeit 6 in einem gemeinsamen Hüllrohr 31 kann mit Vorteil von der Messleitung 30 abgegebene Wärme zum Beheizen der Flüssigkeitsleitungen 8, 28 genutzt werden. Dies ist als besonders energieökonomisch insbesondere auch unter dem Aspekt anzusehen, dass die Flüssigkeitsleitungen 8, 28 über nahezu die gesamte Höhe des Bioreaktors 3 im Freien verlaufen, wobei dort unter Umständen sehr niedrige Temperaturen, möglicherweise sogar unter dem Gefrierpunkt, herrschen können. Eine zu starke Abkühlung der Behandlungsflüssigkeit 6 kann somit in effizienter Weise verhindert werden. Anstelle eines Hüllrohres 31 kann auch eine andere geeignete Ummantelung vorgesehen sein. Das Hüllrohr 31 kann - beispielsweise über eine Rohrschelle 32 - in geeigneter Weise außenseitig am erfindungsgemäßen Bioreaktor 3 befestigt sein. Fig. 10 und 11 zeigen diesbezüglich eine Schellenbefestigung in einem Haltekanal 33 einer dem erfindungsgemäßen Bioreaktor 3 zugeordneten Steigleiter 34.

### Bezugszeichenliste

- 1: Anlage
- 2: Abgas, ungereinigt
- 2a: Abgas, gereinigt
- 3: Bioreaktor
- 4: Reaktorraum von 3
- 5: zweite Befeuchtungseinrichtung (zur Wartung)
- 6: Behandlungsflüssigkeit
- 7: Fermenter, erste Befeuchtungseinrichtung, Gaswäscher
- 8: Steigleitung für 6
- 9: Prall- und Verteilerplatte
- 10: Vorratsbehälter
- 11: Leitung für 6 von 10 nach 7
- 12: Zugabeöffnung für H in 7
- 13: Steuer- und Regelvorrichtung
- 14: Heizung in 7
- 15: Kompensatorteil
- 16: Eintrittsöffnung von 2 in 4
- 17: Rad an 7
- 18: Regelklappe für 2 in 7
- 19: Gelenk für 18
- 20: Boden von 7
- 21: Gaseintrittsstutzen von 7
- 22: Perforation von 18
- 23: Mantel um 4
- 24: Deckel auf 23
- 25: Abzugskamin in 24
- 26: Mannloch in 23
- 27: Luftverteiler für 2
- 27a: Gaseintrittsabschnitt von 27 für 2
- 27b: Stützabschnitt von 27 für T
- 27c: Befestigungsflansch von 27 an 23
- 27d: Montageabschnitt von 27 für 15
- 27e: Perforation in 27a
- 28: Überlaufleitung für 6 von K nach 7
- 28a: (offenes) oberes Rohrende von 28
- 29: Sicherheitsventil für 28
- 29a: Gehäuse von 29
- 29b: Hohlkugel von 29
- 30: Messleitung von 2/2a
- 31: Hüllrohr für 8, 28, 30
- 32: Rohrschelle um 31
- 33: Haltekanal für 32 an 34
- 34: Steigleiter

- A: Ruhestellung von 18
- B: ausgelenkte Stellung von 18, parallel zu 2
- B7: Breite von 7
- C: ausgelenkte Stellung von 18 quer zu 2
- F: Fuß von 3
- FID: Erfassungseinrichtung, Flammenionisationsdetektor
- H: Hilfsstoff
- H_{T}: mit T befüllte Höhe in 4
- K: Kopf von 3
- M1: zentraler Abluftventilator
- M2: Pumpe für 6 aus 7
- M3: Pumpe für 6 aus 10
- MP1: Messpunkt für 2a
- MP2: Messpunkt für 2
- PID: Erfassungseinrichtung, Photoionisationsdetektor
- SPS: Speicherprogrammierbare Steuerung
- T: Trägermaterial in 4
- X-X: vertikale Achse von ¾
- Y-Y: Achse von 27

## Patentansprüche

1. Verfahren zur chemisch-biologischen Reinigung von Abgasen (2), wobei als Emissionen angefallene, in den Abgasen (2) enthaltene Verbindungen hinsichtlich ihrer chemischen Zusammensetzung und Menge im Abgas (2) bestimmt und in mindestens einem Reaktorraum (4) eines Bioreaktors (3) abgebaut werden, in dem auf einem inerten Trägermaterial (T) ein Biofilm mit mindestens einer Art von zum Abbau der organischen Verbindungen geeigneten Mikroorganismen angesiedelt ist, wobei das inerte Trägermaterial (T) und der Biofilm mittels mindestens einer Befeuchtungseinrichturig (5, 7) mit einer wässrigen Behandlungsflüssigkeit (6) befeuchtet werden, welche in einem Fermenter (7) mit den Mikrorganismen sowie mit Nährstoffen für dieselben versetzt wird, wobei das Abgas (2) vor seinem Eintritt in den Bioreaktor (3) mit der Behandlungsflüssigkeit (6) befeuchtet wird, so dass bereits befeuchtetes Abgas (2) in den Reaktorraum (4) gelangt, wobei die Befeuchtung des Abgases (2) im Fermenter (7) vergenommen wird, indem eine geregelte Menge des Abgases (2) im Fermenter (7) mit der Behandlungsflüssigkeit (6) in Kontakt gebracht wird,
**dadurch gekennzeichnet, dass** ein Behälter, der den Fermenter (7) bildet, gleichzeitig als Befeuchter und Gaswäscher für das Abgas (2) eingesetzt wird, wobei in dem Fermenter(7) ein Befeuchtungsgrad des Abgases (2) über eine in die Behandlungsflüssigkeit (6) eintauchende, insbesondere zumindest teilweise perforierte, Regelklappe gesteuert wird, durch welche das Abgas (2) zumindest teilweise durch die Behandlungsflüssigkeit (6) geführt wird.

2. Verfahren nach Anspruch 1,
**dadurch gekennzeichnet, dass** vor der Befeuchtung des Abgases (2) die chemische Zusammensetzung und Menge der im Abgas (2) enthaltenen Verbindungen bestimmt wird, wobei vorzugsweise entsprechend der chemischen Zusammensetzung und Menge der als Emissionen im Abgas (2) enthaltenen Verbindungen Steuersignale für einen Grad der Befeuchtung und/oder für eine Temperierung des in den Reaktorraum (4) eintretenden Abgases (2) gebildet werden.

3. Verfahren nach Anspruch 1 oder 2,
**dadurch gekennzeichnet, dass** die Temperatur des befeuchteten Abgases (2) durch eine Temperierung der Behandlungsflüssigkeit (6) gesteuert oder geregelt wird, wobei insbesondere im Reaktorraum (4) über das befeuchtete und temperierte Abgas (2) eine Temperatur im Bereich von 30 °C bis 70 "C eingestellt wird, und wobei bevorzugt die Temperierung der Behandlungsflüssigkeit (6) durch eine im Fermenter (7) angeordnete Heizung (14) erfolgt.

4. Verfahren nach einem der Ansprüche 1 bis 3,
**dadurch gekennzeichnet, dass** die Nährstoffe in einer Mischung mit fest voreingestelltem Verhältnis zueinander in die Behandlungsflüssigkeit (6) dosiert werden, insbesondere indem in der Behandlungsflüssigkeit (6) durch die Voreinstellung des Verhältnisses der Nährstoffe zueinander ein molares Verhältnis von Kohlenstoff zu Stickstoff zu Phosphor im Bereich von 100 : 2,5 bis 7,5 : 0,2 bis 3,0, vorzugsweise von 100 : 5 : 1, eingestellt wird.

5. Verfahren nach einem der Ansprüche 2 bis 4,
**dadurch gekennzeichnet, dass** in dem gereinigten Abgas (2a), nachdem dieses aus dem Bioreaktor (3) ausgetreten ist, eine weitere Bestimmung der chemischen Zusammensetzung und Menge eines gegebenenfalls vorhandenen Restanteils der ursprünglich enthaltenen Verbindungen erfolgt, wobei insbesondere die chemische Zusammensetzung und Menge der als Emissionen im Abgas (2) enthaltenen Verbindungen vor und nach der Reinigung des Abgases (2) miteinander und/oder mit einem festgelegten Richtwert verglichen und daraus Steuersignale für die Befeuchtung und Temperierung des Abgases (2) gebildet werden.

6. Verfahren nach einem der Ansprüche 1 bis 5,
**dadurch gekennzeichnet, dass** im Fermenter (7) durch Dosierung geeigneter saurer oder alkalischer Zusatzstoffe der pH-Wert der Behandlungsflüssigkeit (6) geregelt wird, wobei insbesondere entsprechend der chemischen Zusammensetzung und Menge der im Abgas (2) enthaltenen Verbindungen, ein Löslichkeitsvermittler zwischen den als Emissionen angefallenen, im Abgas (2) enthaltenen Verbindungen und der Behandlungsflüssigkeit (6), wie ein Keton oder Alkohol, in die Behandlungsflüssigkeit (6) dosiert wird, vorzugsweise auf dem Wege einer separaten Dosierung in den Fermenter (7).

7. Verfahren nach einem der Ansprüche 1 bis 6,
**dadurch gekennzeichnet, dass** die im Abgas (2) enthaltenen Verbindungen in einem Bioreaktor (3) abgebaut werden, dessen Reaktorraum (4) aus einer insbesondere zylindrischen, vom Abgas (2) durchströmbaren Kammer gebildet ist, wobei das Abgas (2) den Bioreaktor (3) vertikal von einem unten liegenden Fuß (F) nach einem oben liegenden Kopf (K) durchströmt, wobei vorzugsweise das befeuchtete Abgas (2) mit der zur Befeuchtung des inerten Trägermaterials (T) und des Biofilms dienenden Behandlungsflüssigkeit (6) im Bioreaktor (3) im Gleichstrom geführt wird, und wobei insbesondere, im Bioreaktor (3) gegebenenfalls vorhandene, überschüssige Behandlungsflüssigkeit (6) aus dem Bioreaktor (3) in den Fermenter (7) tropft und/oder aus dem Reaktorraum (4) über eine von einem oberen Bereich (K) des Reaktorraumes (4) zum Fermenter (7) führende Überlaufleitung in den Fermenter (7) zurückgeführt wird.

8. Verfahren nach einem der Ansprüche 1 bis 7,
**dadurch gekennzeichnet, dass** ein Strom des aus dem Fermenter (7) kommenden Abgases (2) vor seinem Eintritt in den mit dem inerten Trägermaterial (T) gefüllten Reaktorraum (4) mittels eines in den Reaktorraum (4) hineinragenden Luftverteilers (27) in eine Vielzahl von Teilströmen aufgeteilt wird., wobei vorzugsweise eine Strömungsgeschwindigkeit des Abgases (2) im Reaktorraum (4), insbesondere der Teilströme des Abgases (2), durch eine Schüttdichte des inerten Trägermaterials (T) eingestellt und besonders bevorzugt über eine sich über eine Höhe (H) des Reaktorraumes (4) verändernde Schüttdichte des inerten Trägermaterials (T) während des Durchströmens des Abgases (2) durch den Reaktorraum (4) verändert wird.

9. Verfahren nach einem der Ansprüche 1 bis 8,
**dadurch gekennzeichnet, dass** der Volumenstrom des Abgases (2) in einem Bereich von 7000 m³/h bis 30000 m³/h liegt, wobei das Abgas (2) beim Eintritt in den Fermenter (7) insbesondere eine Strömungsgeschwindigkeit von mindestens 7 m/s aufweist.

10. Verfahren nach einem
der Ansprüche 1 bis 9,
**dadurch gekennzeichnet, dass** ein in einer insbesondere als Messschlauch ausgebildeten Messleitung (30) geführter Messstrom des Abgases (2) durch gemeinsame Führung mit mindestens einer Leitung (8, 28) der Behandlungsflüssigkeit (6), welche einen Kopf (K) des Bioreaktors (3) mit dem Fermenter (7) verbindet, in einem Hüllrohr (31) die Behandlungsflüssigkeit (6) temperiert.

11. Bioreaktor (3) zur chemisch-biologischen Reinigung von Abgasen (2), insbesondere zur Durchführung eines Verfahrens nach einem der Ansprüche 1 bis 10,
- mit mindestens einem Reaktorraum (4), in dem im Abgas (2) enthaltene als Emissionen angefallene Verbindungen abgebaut werden,
- mit einem sich in dem Reaktorraum (4) befindenden inerten Trägermaterial (T), auf dem ein Biofilm mit mindestens einer Art von zum Abbau der organischen Verbindungen geeigneten Mikroorganismen angesiedelt ist,
- mit mindestens einer Befeuchtungseinrichtung (5, 7), mittels derer das Trägermaterial (T) und der Biofilm mit einer wässrigen Behandlungsflüssigkeit (6) befeuchtet werden, welche die Mikrorganismen sowie Nährstoffe für dieselben enthält, wobei der Fermenter (7) ein Behälter ist, der dem Reaktorraum (4) in Strömungsrichtung des Abgases (2) derart vorgeordnet ist, dass das Abgas (2) durch den Fermenter (7) in den Reaktorraum (4) gelangt, wobei es im Fermenter (7) mit der wässrigen Behandlungsflüssigkeit (6) befeuchtet wird,
**dadurch gekennzeichnet, dass** der Fermenter (7) über ein Kompensatorteil (15), welches insbesondere aus einem elastomeren Material besteht und/oder als Faltenbalg ausgebildet ist, gasdicht mit einer an einem Fuß (F) des Reaktorraumes (4) befindlichen Eintrittsöffnung (16) für das Abgas (2) lösbar verbunden ist, wobei in dem Fermenter (7) eine in die Behandlungsflüssigkeit (6) eintauchende, insbesondere zumindest teilweise mit einer Perforierung (22) versehene, Regelklappe (18) befestigt ist.

12. Bioreaktor (3) nach Anspruch 11,
**dadurch gekennzeichnet, dass** der Fermenter (7) durch an seiner Unterseite montierte Räder (17) verfahrbar ist.

13. Bioreaktor (3) nach einem der Ansprüche 11 bis 12,
**dadurch gekennzeichnet, dass** der Reaktorraum (4)von einem in der Grundgestalt hohlzylindrisch ausgebildeten, vertikal ausgerichteten und in einem unteren Bereich auf seine Eintrittsöffnung (16) für das Abgas (2) hin konisch zulaufenden Mantel (23) umgeben ist, wobei vorzugsweise in dem Mantel (23) des Reaktorraums (4), insbesondere in dessen unterem, konisch ausgebildeten Bereich, mindestens ein verschließbares Mannloch (26) ausgebildet ist und/oder wobei der Reaktorraum (4) unterseitig einen seine Eintrittsöffnung (16) für das Abgas (2) verschließenden perforierten Boden aufweist.

14. Bioreaktor (3) nach
einem der Ansprüche 11 bis 13,
**dadurch gekennzeichnet, dass** in einem unteren Bereich des Reaktorraums (4) ein Luftverteiler (27) angeordnet ist, durch den ein Strom des aus dem Fermenter (7) kommenden Abgases (2) vor seinem Eintritt in den mit dem inerten Trägermaterial (T) gefüllten Reaktorraum (4) in eine Vielzahl von Teilströmen aufgeteilt wird, wobei der Luftverteiler (27) vorzugsweise aus einem in der Grundgestalt insbesondere zylindrisch ausgebildeten, vertikal ausgerichteten, perforierten unteren Gaseintritts Abschnitt (27a) für das Abgas (2) und einem nach oben hin konisch spitz zulaufenden, vertikal ausgerichteten, insbesondere massiven Stützabschnitt (27b) für das inerte Trägermaterial (T) gebildet und konzentrisch mit der Mittenachse (X-X) des Reaktorraumes (4) angeordnet ist.

15. Bioreaktor (3) nach einem der Ansprüche 11 bis 14,
**dadurch gekennzeichnet, dass** der Reaktorraum (4)über eine vom Kopf (K) des Reaktorraumes (4) zum Fermenter (7) führende Überlaufleitung (28) für die Behandlungsflüssigkeit (6) mit dem Fermenter (7) verbunden ist, wobei die Überlaufleitung (28) insbesondere durch ein Sicherheitsventil (29) verschlossen ist, welches vorzugsweise durch eine in einem Gehäuse (29a) gehaltene, in einem nach oben offenem, oberseitigem Ende (28a) der Überlaufleitung (28) liegende, insbesondere aus Stahl bestehende, Hohlkugel (29b) gebildet ist, und/oder dass der Reaktorraum (4) über eine vom Fermenter (7) zum Kopf (K) des Reaktorraumes (4) führende, mit einer Pumpe (M2) ausgerüstete Steigleitung (8) für die Behandlungsflüssigkeit (6) verbunden ist, deren oberseitiges Ende als Befeuchtungseinrichtung (5) für das inerte Trägermaterial (T) und den Biofilm ausgebildet ist, wobei insbesondere unter dem als Befeuchtungseinrichtung (5) dienenden, oberseitigen Ende der Steigleitung (8) über dem inerten Trägermaterial (T) und dem Biofilm im Reaktorraum (4) eine Prall und Verteilerplatte (9) für die Behandlungsflüssigkeit (6) angeordnet ist.

16. Anlage (1) zur chemisch biologischen Reinigung von Abgasen (2) zur Durchführung eines Verfahrens nach einem der Ansprüche 1 bis 10 und mit einem Bioreaktor (3) nach einem der Ansprüche 11 bis 15,
- mit einer Erfassungseinrichtung (PID/FID), in der als Emissionen angefallene, in den Abgasen (2) enthaltene Verbindungen hinsichtlich ihrer chemischen Zusammensetzung und Menge im Abgas (2) bestimmt werden,
- mit einem Bioreaktor (3), der mindestens umfasst:
einen Reaktorraum (4), in dem die im Abgas (2) enthaltenen, als Emissionen angefallenen Verbindungen abgebaut werden,
ein sich in dem Reaktorraum (4) befindendes inertes Trägermaterial (T), auf dem ein Biofilm mit mindestens einer Art von zum Abbau der organischen Verbindungen geeigneten Mikroorganismen angesiedelt ist,
mindestens eine Befeuchtungseinrichtung (5, 7), mittels derer das Trägermaterial (T) und der Biofilm mit einer wässrigen Behandlungsflüssigkeit (6) befeuchtet werden, welche die Mikrorganismen sowie Nährstoffe für dieselben enthält,
- sowie mit einem Fermenter (7), in dem die wässrige Behandlungsflüssigkeit (6) mit den Mikroorganismen sowie mit den Nährstoffen versetzt wird, wobei die Erfassungseinrichtung (PID/FID), in der die als Emissionen angefallenen, in den Abgasen (2) enthaltenen Verbindungen hinsichtlich ihrer chemischen Zusammensetzung und Menge im Abgas (2) bestimmt werden, Bestandteil einer Vorrichtung (13) zur Steuerung und/oder Regelung eines Befeuchtungsgrades des Abgases (2) im Fermenter (7) ist.

17. Anlage (1) nach Anspruch 16,
**dadurch gekennzeichnet, dass** die Erfassungseinrichtung (PID/FID), in der die als Emissionen angefallenen, in den Abgasen (2) enthaltenen Verbindungen hinsichtlich ihrer chemischen Zusammensetzung und Menge im Abgas (2) bestimmt werden, Bestandteil einer Vorrichtung (13) zur Steuerung und/oder Regelung der Temperatur im Fermenter (7) ist, wobei die Erfassungseinrichtung (FID/PID) vorzugsweise einen Flammionisationsdetekdor (FID) oder einen Photoionisationsdetektor (PID) umfasst und insbesondere über eine einen Messstrom des Abgases (2) führende, insbesondere als Messschlauch ausgebildete Messleitung (30) mit einer Stelle (MP2) des Stromes des Abgases (2) vor seinem Eintritt in den Bioreaktor (3) verbunden ist.

18. Anlage (1) nach einem der Ansprüche 16 oder 17,
**gekennzeichnet durch** eine speicherprogrammierbare Steuerung (SPS) zur Steuerung und Regelung des Befeuchtungsvorgangs des Abgases (2) und/oder der Temperatur im Fermenter (7) und/oder im Reaktorraum (4) des Bioreaktors (3).

19. Anlage (1) nach dem Oberbegriff des Anspruchs 16, insbesondere nach Anspruch 17 oder 18
**dadurch gekennzeichnet, dass** mindestens eine einen Messstrom des Abgases (2) führende Messleitung (30) in einem gemeinsamen Hüllrohr (31) oder Mantel mit einer Leitung (8, 28) für die Behandlungsflüssigkeit (6) geführt ist, welche einen/den Kopf (K) des Bioreaktors (3) mit dem Fermenter (7) verbindet.

## Claims

1. Method for the chemical-biological cleaning of exhaust gases (2), wherein compounds contained in the exhaust gases (2) and accruing as emissions are determined with regard to the chemical composition thereof and the amount thereof in the exhaust gas (2) and are broken down in at least one reactor chamber (4) of a bioreactor (3), in which a biofilm comprising at least one type of microorganism suitable for breaking down the organic compounds has settled on an inert carrier material (T), wherein the inert carrier material (T) and the biofilm are humidified, by means of at least one humidification device (5, 7), with an aqueous treatment liquid (6) which is mixed with the microorganisms and with nutrients for the latter in a fermenter (7), wherein the exhaust gas (2) is humidified with the treatment liquid (6) before entering the bioreactor (3) such that already humidified exhaust gas (2) enters the reactor chamber (4), wherein the humidification of the exhaust gas (2) is carried out in the fermenter (7) by bringing a controlled amount of the exhaust gas (2) into contact with the treatment liquid (6) in the fermenter (7),
**characterized in that** a container which forms the fermenter (7) is simultaneously used as a humidifier and gas scrubber for the exhaust gas (2), wherein, in the fermenter (7), a degree of humidification of the exhaust gas (2) is controlled via an in particular at least partially perforated control flap, which is immersed in the treatment liquid (6) and by which the exhaust gas (2) is at least partially conducted through the treatment liquid (6).

2. Method according to claim 1,
**characterized in that** the chemical composition and the amount of the compounds contained in the exhaust gas (2) is determined before the exhaust gas (2) is humidified, wherein preferably control signals for a degree of humidification and/or for controlling the temperature of the exhaust gas (2) entering the reactor chamber (4) are formed according to the chemical composition and the amount of the compounds contained as emissions in the exhaust gas (2).

3. Method according to claim 1 or 2,
**characterized in that** the temperature of the humidified exhaust gas (2) is controlled or adjusted by controlling the temperature of the treatment liquid (6), wherein in particular a temperature in the range from 30°C to 70°C is set in the reactor chamber (4) via the humidified and temperature-controlled exhaust gas (2), and wherein preferably the temperature of the treatment liquid (6) is controlled by a heater (14) arranged in the fermenter (7) .

4. Method according to any one of claims 1 to 3,
**characterized in that** the nutrients are metered into the treatment liquid (6) in a mixture at a fixedly preset ratio with respect to one another, in particular by setting a molar ratio of carbon to nitrogen to phosphorus in the range from 100:2.5 to 7.5:0.2 to 3.0, preferably 100:5:1, by presetting the ratio of the nutrients with respect to one another.

5. Method according to any one of claims 2 to 4,
**characterized in that**, in the cleaned exhaust gas (2a), after the latter has exited from the bioreactor (3), a further determination of the chemical composition and of the amount of any residual proportion of the compounds originally contained therein takes place, wherein in particular the chemical composition and the amount of the compounds contained as emissions in the exhaust gas (2) before and after the cleaning of the exhaust gas (2) are compared with one another and/or with a specified reference value, and control signals for humidifying and controlling the temperature of the exhaust gas (2) are formed therefrom.

6. Method according to any one of claims 1 to 5,
**characterized in that**, in the fermenter (7), the pH value of the treatment liquid (6) is adjusted by metering suitable acidic or alkaline additives, wherein in particular a solubility enhancer between the compounds contained in the exhaust gas (2) and accruing as emissions and the treatment liquid (6), such as a ketone or alcohol, is metered into the treatment liquid (6), preferably by way of a separate metering into the fermenter (7), according to the chemical composition and the amount of the compounds contained in the exhaust gas (2).

7. Method according to any one of claims 1 to 6,
**characterized in that** the compounds contained in the exhaust gas (2) are broken down in a bioreactor (3), the reactor chamber (4) of which is formed of an in particular cylindrical chamber, through which the exhaust gas (2) can flow, wherein the exhaust gas (2) flows through the bioreactor (3) vertically from a foot (F) at the bottom to a head (K) at the top, wherein preferably the humidified exhaust gas (2) is conducted in the bioreactor (3) in co-current with the treatment liquid (6) which serves to humidify the inert carrier material (T) and the biofilm, and wherein in particular any excess treatment liquid (6) present in the bioreactor (3) drips from the bioreactor (3) into the fermenter (7) and/or is fed back from the reactor chamber (4) to the fermenter (7) via an overflow line which leads from a top region (K) of the reactor chamber (4) to the fermenter (7).

8. Method according to any one of claims 1 to 7,
**characterized in that** a stream of the exhaust gas (2) coming from the fermenter (7), before it enters the reactor chamber (4) filled with the inert carrier material (T), is divided into a plurality of partial streams by means of an air distributor (27) which protrudes into the reactor chamber (4), wherein preferably a flow rate of the exhaust gas (2) in the reactor chamber (4), in particular of the partial streams of the exhaust gas (2), is set by a bulk density of the inert carrier material (T) and particularly preferably is varied as the exhaust gas (2) flows through the reactor chamber (4) by a bulk density of the inert carrier material (T) which varies over a height (H) of the reactor chamber (4).

9. Method according to any one of claims 1 to 8,
**characterized in that** the volume flow of the exhaust gas (2) lies in a range from 7000 m³/h to 30000 m³/h, wherein the exhaust gas (2) in particular has a flow rate of 7 m/s as it enters the fermenter (7).

10. Method according to any one of claims 1 to 9, **characterized in that** a measurement stream of the exhaust gas (2), which is conducted in a measuring line (30) designed in particular as a measuring tube, controls the temperature of the treatment liquid (6) by being jointly guided in a cladding tube (31) with at least one line (8, 28) of the treatment liquid (6) which connects a head (K) of the bioreactor (3) to the fermenter (7) .

11. Bioreactor (3) for the chemical-biological cleaning of exhaust gases (2), in particular for carrying out a method according to any one of claims 1 to 10,
- comprising at least one reactor chamber (4), in which compounds contained in the exhaust gas (2) and accruing as emissions are broken down,
- comprising an inert carrier material (T), which is located in the reactor chamber (4) and on which a biofilm comprising at least one type of microorganism suitable for breaking down the organic compounds has settled,
- comprising at least one humidification device (5, 7), by means of which the carrier material (T) and the biofilm are humidified with an aqueous treatment liquid (6) which contains the microorganisms and nutrients for the latter, wherein the fermenter (7) is a container which is arranged upstream of the reactor chamber (4) in the flow direction of the exhaust gas (2) such that the exhaust gas (2) enters the reactor chamber (4) through the fermenter (7), the exhaust gas being humidified with the aqueous treatment liquid (6) in the fermenter (7), **characterized in that** the fermenter (7), via a compensator part (15) which in particular is made of an elastomeric material and/or is designed as a bellows, is detachably connected in a gas-tight manner to an inlet opening (16) for the exhaust gas (2) which is located at a foot (F) of the reactor chamber (4), wherein a control flap (18), which is immersed in the treatment liquid (6) and in particular is provided at least in part with a perforation (22), is fastened in the fermenter (7).

12. Bioreactor (3) according to claim 11,
**characterized in that** the fermenter (7) is movable by way of wheels (17) mounted on the underside thereof.

13. Bioreactor (3) according to any one of claims 11 to 12, **characterized in that** the reactor chamber (4) is enclosed by a vertically oriented casing (23) which is hollow-cylindrical in its basic shape and in a lower region tapers conically towards the inlet opening (16) thereof for the exhaust gas (2), wherein preferably at least one closable manhole (26) is formed in the casing (23) of the reactor chamber (4), in particular in the lower, conical region thereof, and/or wherein the reactor chamber (4) has on the underside a perforated bottom which closes the inlet opening (16) thereof for the exhaust gas (2).

14. Bioreactor (3) according to any one of claims 11 to 13, **characterized in that** an air distributor (27) is arranged in a lower region of the reactor chamber (4), by which a stream of the exhaust gas (2) coming from the fermenter (7) is divided into a plurality of partial streams before entering the reactor chamber (4) filled with the inert carrier material (T), wherein the air distributor (27) is preferably formed of a vertically oriented, perforated lower gas inlet section (27a) for the exhaust gas (2), which in particular is cylindrical in its basic shape, and of a vertically oriented, in particular solid support section (27b) for the inert carrier material (T), which tapers conically upward to a tip, and is arranged concentrically with the central axis (X-X) of the reactor chamber (4).

15. Bioreactor (3) according to any one of claims 11 to 14, **characterized in that** the reactor chamber (4) is connected to the fermenter (7) via an overflow line (28) for the treatment liquid (6) which leads from the head (K) of the reactor chamber (4) to the fermenter (7), wherein the overflow line (28) is in particular closed by a safety valve (29), which is preferably formed by a hollow ball (29b), in particular made of steel, which is held in a housing (29a) and is located at an upwardly open, top end (28a) of the overflow line (28), and/or **in that** the reactor chamber (4) is connected via a riser pipe (8) for the treatment liquid (6), which leads from the fermenter (7) to the head (K) of the reactor chamber (4) and is equipped with a pump (M2), the top end of said riser pipe being designed as a humidification device (5) for the inert carrier material (T) and the biofilm, wherein in particular a baffle and distribution plate (9) for the treatment liquid (6) is arranged in the reactor chamber (4) below the top end of the riser pipe (8), which serves as the humidification device (5), and above the inert carrier material (T) and the biofilm.

16. Plant (1) for the chemical-biological cleaning of exhaust gases (2) for carrying out a method according to any one of claims 1 to 10 and including a bioreactor (3) according to any one of claims 11 to 15,
- comprising a detection device (PID/FID), in which compounds contained in the exhaust gases (2) and accruing as emissions are determined with regard to the chemical composition thereof and the amount thereof in the exhaust gas (2),
- comprising a bioreactor (3), which comprises at least:
a reactor chamber (4), in which the compounds contained in the exhaust gas (2) and accruing as emissions are broken down,
an inert carrier material (T), which is located in the reactor chamber (4) and on which a biofilm comprising at least one type of microorganism suitable for breaking down the organic compounds has settled,
at least one humidification device (5, 7), by means of which the carrier material (T) and the biofilm are humidified with an aqueous treatment liquid (6) which contains the microorganisms and nutrients for the latter,
- and comprising a fermenter (7), in which the aqueous treatment liquid (6) is mixed with the microorganisms and with the nutrients,
wherein the detection device (PID/FID), in which the compounds contained in the exhaust gases (2) and accruing as emissions are determined with regard to the chemical composition thereof and the amount thereof in the exhaust gas (2), is part of a device (13) for controlling and/or adjusting a degree of humidification of the exhaust gas (2) in the fermenter (7).

17. Plant (1) according to claim 16,
**characterized in that** the detection device (PID/FID), in which the compounds contained in the exhaust gases (2) and accruing as emissions are determined with regard to the chemical composition thereof and the amount thereof in the exhaust gas (2), is part of a device (13) for controlling and/or adjusting the temperature in the fermenter (7), wherein the detection device (FID/PID) preferably comprises a flame ionization detector (FID) or a photoionization detector (PID) and in particular is connected via a measuring line (30), which conducts a measurement stream of the exhaust gas (2) and in particular is designed as a measuring tube, to a point (MP2) in the stream of the exhaust gas (2) before it enters the bioreactor (3).

18. Plant (1) according to any one of claims 16 or 17,
**characterized by** a programmable logic controller (PLC) for controlling and adjusting the humidification of the exhaust gas (2) and/or the temperature in the fermenter (7) and/or in the reactor chamber (4) of the bioreactor (3).

19. Plant (1) according to the preamble of claim 16, in particular according to claim 17 or 18,
**characterized in that** at least one measuring line (30), which conducts a measurement stream of the exhaust gas (2), is guided in a common cladding tube (31) or sheath with a line (8, 28) for the treatment liquid (6) which connects a/the head (K) of the bioreactor (3) to the fermenter (7).

## Revendications

1. Procédé d'épuration biochimique d'effluents gazeux (2), dans lequel les composés contenus comme émissions dans les effluents gazeux (2) sont déterminés du point de vue de leur composition chimique et de leur quantité dans les effluents gazeux (2) et sont décomposés dans au moins un espace de réacteur (4) d'un bioréacteur (3), dans lequel, sur un matériau support inerte (T), est fixé un biofilm avec au moins un type de microorganismes appropriés à la décomposition de composés organiques, le matériau support inerte (T) et le biofilm étant humidifiés à l'aide d'au moins un dispositif d'humidification (5, 7) par un liquide aqueux de traitement (6), auquel sont ajoutés dans un fermenteur (7) les microorganismes ainsi que des nutriments pour ces derniers, les effluents gazeux (2) étant humidifiés par le liquide de traitement (6) avant leur entrée dans le bioréacteur (3), de telle sorte que les effluents gazeux (2) déjà humidifiés arrivent dans l'espace de réacteur (4), l'humidification des effluents gazeux (2) ayant lieu dans le fermenteur (7), tandis qu'une quantité réglée des effluents gazeux (2) dans le fermenteur (7) est mise en contact avec le liquide de traitement (6),
**caractérisé en ce qu'un** récipient formant le fermenteur (7) est utilisé en même temps comme humidificateur et épurateur de gaz pour les effluents gazeux (2), un degré d'humidification des effluents gazeux (2) étant réglé dans le fermenteur (7) au moyen d'un volet de régulation plongeant dans le liquide aqueux de traitement (6), en particulier au moins partiellement perforée, à travers laquelle les effluents gazeux (2) sont acheminé au moins en partie par le liquide de traitement (6).

2. Procédé selon la revendication 1,
**caractérisé en ce que** la composition chimique et la quantité des composés contenus dans les effluents gazeux (2) sont déterminées avant l'humidification des effluents gazeux (2), des signaux de commande pour un degré d'humidification et/ou pour une régulation de température des effluents gazeux (2) entrant dans l'espace de réacteur (4) étant générés de préférence conformément à la composition chimique et à la quantité des composés contenus dans les effluents gazeux (2).

3. Procédé selon la revendication 1 ou 2,
**caractérisé en ce que** la température des effluents gazeux (2) humidifiés est commandée ou réglée par une régulation de température du liquide de traitement (6), une température dans la plage de 30 °C à 70 °C étant réglée en particulier dans l'espace de réacteur (4) au moyen des effluents gazeux (2) humidifiés et tempérés et la régulation de température du liquide de traitement (6) étant effectuée de préférence au moyen d'un chauffage (14) disposé dans le fermenteur (7).

4. Procédé selon l'une des revendications 1 à 3,
**caractérisé en ce que** les nutriments sont dosés dans un mélange dans un rapport prédéfini entre eux dans le liquide de traitement (6), en particulier en réglant un rapport molaire du carbone à l'azote au phosphore de 100 : 2,5 à 7,5 : 0,2 à 3,0, de préférence de 100 : 5 : 1 dans le liquide de traitement (6) par le préréglage du rapport des nutriments entre eux.

5. Procédé selon l'une des revendications 2 à 4,
**caractérisé en ce que** dans les effluents gazeux purifiés (2a) après leur sortie du bioréacteur (3), une autre détermination de la composition chimique et de la quantité d'une partie restant éventuellement présente des composés contenus à l'origine a lieu, en particulier la composition chimique et la quantité des composés contenus dans les effluents gazeux (2) en tant qu'émissions avant et après l'épuration des effluents gazeux (2) étant comparées entre elles et/ou avec une valeur indicative fixée et des signaux de commande pour l'humidification et la régulation de température des effluents gazeux (2) étant générés sur la base de ces signaux de commande.

6. Procédé selon l'une des revendications 1 à 5,
**caractérisé en ce que** la valeur pH du liquide de traitement (6) est réglée dans le fermenteur (7) au moyen du dosage des additifs acides ou alcalins appropriés, un agent solubilisant entre les composés contenus dans les effluents gazeux (2) et produits comme émissions et le liquide de traitement (6), comme un cétone ou un alcool, étant dosé dans le liquide de traitement (6) en particulier conformément à la composition chimique et à la quantité des composés contenus dans les effluents gazeux (2), de préférence par le biais d'un dosage séparé dans le fermenteur (7).

7. Procédé selon l'une des revendications 1 à 6,
**caractérisé en ce que** les composés contenus dans les effluents gazeux (2) sont dégradés dans un bioréacteur (3), dont l'espace de réacteur (4) étant constitué d'une chambre en particulier cylindrique, traversée par les effluents gazeux (2), les effluents gazeux (2) traversant le bioréacteur (3) verticalement d'un pied (F) se trouvant en bas à une tête (K) se trouvant en haut, les effluents gazeux (2) humidifiés étant acheminés de préférence en courant continu avec le liquide de traitement (6) servant à l'humidification du matériau de support inerte (T) et du biofilm dans le bioréacteur (3) et en particulier le liquide de traitement (6) excédentaire se trouvant éventuellement dans le bioréacteur (3) s'égouttant du bioréacteur (3) dans le fermenteur (7) et/ou étant renvoyé de l'espace de réacteur (4) au fermenteur (7) via une conduite de trop-plein conduisant d'une zone supérieure (K) de l'espace de réacteur (4) vers le fermenteur (7).

8. Procédé selon l'une des revendications 1 à 7,
**caractérisé en ce qu'un** courant des effluents gazeux (2) venant du fermenteur (7) avant leur entrée dans l'espace de réacteur (4) rempli du matériau de support inerte (T) est divisé en une pluralité de courant partiels au moyen d'un collecteur d'air (27) pénétrant dans l'espace de réacteur (4), de préférence une vitesse de circulation des effluents gazeux (2) dans l'espace de réacteur (4), en particulier des courants partiels des effluents gazeux (2) étant réglée à l'aide d'une densité apparente du matériau de support inerte (T) et particulièrement de préférence étant modifiée à l'aide d'une densité apparente du matériau support inerte (T) changeante en fonction d'une hauteur (H) de l'espace de réacteur (4) pendant la traversée de l'espace de réacteur (4) par les effluents gazeux (2).

9. Procédé selon l'une des revendications 1 à 8,
**caractérisé en ce que** le débit volumique des effluents gazeux (2) est compris dans une plage de 7000 m³/h à 30000 m³/h, les effluents gazeux (2) présentant à l'entrée dans le fermenteur (7) en particulier une vitesse de circulation d'au moins 7 m/s.

10. Procédé selon l'une des revendications 1 à 9,
**caractérisé en ce qu'un** courant de mesure des effluents gazeux (2) acheminé dans une conduite de mesure (30) conçue en particulier sous forme de tuyau de mesure régule la température du liquide de traitement (6) dans un tube de gainage (31) par un acheminement commun du liquide de traitement (6) avec au moins une conduite (8, 28), qui relie une tête (K) du bioréacteur (3) avec le fermenteur (7).

11. Bioréacteur (3) pour l'épuration biochimique d'effluents gazeux (2), en particulier pour la mise en œuvre d'un procédé selon l'une des revendications de 1 à 10,
- avec au moins un espace de réacteur (4) dans lequel sont dégradées les composés contenus dans les effluents gazeux (2) et produits comme des émissions,
- avec un matériau de support inerte (T) se trouvant dans l'espace de réacteur (4) sur lequel s'est posé un biofilm avec au moins une espèce de microorganismes adaptés à la dégradation des composés organiques,
- avec au moins un dispositif d'humidification (5, 7), au moyen desquels le matériau de support inerte (T) et le biofilm sont humidifiés par un liquide aqueux de traitement (6) contenant les microorganismes et des nutriments destinés à ces derniers, le fermenteur (7) étant un récipient situé en amont de l'espace de réacteur (4) en direction de la circulation des effluents gazeux (2) de telle sorte que les effluents gazeux (2) arrivent dans l'espace de réacteur (4) en passant par le fermenteur (7) étant humidifiés dans le fermenteur (7) par le liquide aqueux de traitement (6),
**caractérisé en ce que** le fermenteur (7) est relié de manière étanche aux gaz et de façon amovible avec une ouverture d'entrée (16) des effluents gazeux (2) se trouvant sur un pied (F) de l'espace de réacteur (4) par un élément de compensateur (15) fabriqué en particulier à partir d'un matériau élastomère et/ou réalisé sous forme de soufflet, un volet de régulation (18) plongeant dans le liquide de traitement (6), en particulier équipé au moins partiellement d'une perforation (22), étant fixé dans le fermenteur (7).

12. Bioréacteur (3) selon la revendication 11,
**caractérisé en ce que** le fermenteur (7) peut être déplacé au moyen des roues (17) montées sur sa face inférieure.

13. Bioréacteur (3) selon l'une des revendications 11 à 12,
**caractérisé en ce que** l'espace de réacteur (4) est entouré d'une enveloppe (23) cylindrique creuse dans sa configuration de base, orientée verticalement et effilée dans une zone inférieure vers son ouverture d'entrée (16) pour les effluents gazeux (2), au moins un trou d'homme (26) obturable étant réalisé de préférence dans l'enveloppe (23) de l'espace de réacteur (4), en particulier dans sa zone inférieure conique et/ou l'espace de réacteur (4) présentant sur sa face inférieure un fond perforé obturant son ouverture d'entrée (16) pour les effluents gazeux (2).

14. Bioréacteur (3) selon l'une des revendications 11 à 13,
**caractérisé en ce qu'**un collecteur d'air (27) est disposé dans une zone inférieure de l'espace de réacteur (4), qui divise un courant des effluents gazeux (2) venant du fermenteur (7) avant leur entrée dans l'espace de réacteur (4) rempli du matériau support inerte (T) en une pluralité de courants partiels, le collecteur d'air (27) étant formé de préférence par une partie (27a) inférieure de l'entrée des effluents gazeux (2) en particulier cylindrique dans sa configuration de base, orientée verticalement et perforée et une partie de support (27b) effilée de façon pointue vers le haut, orientée verticalement, en particulier massive pour le matériau de support inerte (T) et étant concentrique à l'axe central (X-X) de l'espace de réacteur (4).

15. Bioréacteur (3) selon l'une des revendications 11 à 14,
**caractérisé en ce que** l'espace de réacteur (4) est relié avec le fermenteur (7) via une conduite de trop-plein (28) pour le liquide de traitement (6) conduisant de la tête (K) de l'espace de réacteur (4) au fermenteur (7), la conduite de trop-plein (28) étant fermée en particulier par une soupape de sécurité (29) formée de préférence par une sphère creuse (29b) contenue dans un boîtier (29a) se trouvant dans une extrémité ouverte de la face supérieure (28a) de la conduite de trop-plein (28), fabriquée en particulier en acier, et/ou que l'espace de réacteur (4) est relié par un conduit ascendant (8) pour le liquide de traitement (6) équipé d'une pompe (M2) menant du fermenteur (7) à la tête (K) de l'espace de réacteur (4), dont l'extrémité de face supérieure est réalisé sous forme de dispositif d'humidification (5) du matériau support inerte (T) et du biofilm, une plaque de distribution formant chicane (9) pour le liquide de traitement (6) étant disposée en particulier sous l'extrémité de face supérieure du conduit ascendant (8) servant de dispositif d'humidification (5) au-dessus du matériau support inerte (T) et du biofilm dans l'espace de réacteur (4).

16. Installation (1) d'épuration biochimique d'effluents gazeux (2) pour la mise en œuvre d'un procédé selon l'une des revendications 1 à 10 et avec un bioréacteur (3) selon l'une des revendications 11 à 15,
- avec un dispositif de détection (PID/FID), dans lequel les composés contenus dans les effluents gazeux (2) et produits comme émissions sont déterminés en ce qui concerne leur composition chimique et leur quantité dans les effluents gazeux (2),
- avec un bioréacteur (3) comprenant au moins :
un espace de réacteur (4), dans lequel sont dégradés les composés contenus dans les effluents gazeux (2) et produits comme émissions,
un matériau de support inerte (T) se trouvant dans l'espace de réacteur (4) sur lequel s'est posé un biofilm avec au moins une espèce de microorganismes adaptés à la dégradation des composés organiques,
au moins un dispositif d'humidification (5, 7) servant à l'humidification du matériau de support inerte (T) et du liquide aqueux de traitement (6) contenant les microorganismes ainsi que des nutriments pour ces derniers,
- ainsi qu'un fermenteur (7), auquel sont ajoutés le liquide aqueux de traitement (6) avec les microorganismes ainsi que les nutriments,
le dispositif de détection (PID/FID), dans lequel les composés contenus dans les effluents gazeux (2) et produits comme émissions sont déterminés en ce qui concerne leur composition chimique et leur quantité dans les effluents gazeux (2), faisant partie d'un dispositif (13) de commande et/ou de régulation d'un degré d'humidification des effluents gazeux (2) dans le fermenteur (7).

17. Installation (1) selon la revendication 16,
**caractérisée en ce que** le dispositif de détection (PID/FID), dans lequel les composés contenus dans les effluents gazeux (2) et produits comme émissions sont déterminés en ce qui concerne leur composition chimique et leur quantité dans les effluents gazeux (2), fait partie d'un dispositif (13) de commande et/ou de régulation de la température dans le fermenteur (7), le dispositif de détection (FID/PID) comprend de préférence un détecteur à ionisation de flamme (FID) ou un détecteur à photoionisation (PID) et étant relié en particulier par une conduite de mesure (30) conçue en particulier sous forme de tuyau de mesure acheminant un courant de mesure des effluents gazeux (2) à un endroit (MP2) du courant des effluents gazeux (2) avant leur entrée dans le bioréacteur (3).

18. Installation (1) selon l'une des revendications 16 ou 17,
**caractérisée par** un automate programmable industriel (API) pour la commande et la régulation du procédé d'humidification des effluents gazeux (2) et/ou de la température dans le fermenteur (7) et/ou dans l'espace de réacteur (4) du bioréacteur (3).

19. Installation (1) selon le préambule de la revendication 16, en particulier selon la revendication 17 ou 18,
**caractérisée en ce qu'**au moins un conduit de mesure (30) acheminant un courant de mesure des effluents gazeux (2) dans un tube de grainage (31) commun ou une enveloppe avec un conduit (8, 28) pour le liquide de traitement (6) est guidé, qui relie une/la tête (K) du bioréacteur (3) au fermenteur (7).
